Europäisches Patentamt

(19) European Patent Office

Office européen des brevets

(11) **EP 0 562 632 B1**

(12) **EUROPEAN PATENT SPECIFICATION**

(45) Date of publication and mention
of the grant of the patent:
**01.10.1997 Bulletin 1997/40**

(51) Int. Cl.⁶: **B24B 49/04**

(21) Application number: **93105055.3**

(22) Date of filing: **26.03.1993**

(54) **Method and apparatus for grinding a workpiece**

Verfahren und Vorrichtung zum Schleifen eines Werkstückes

Méthode et appareil pour rectifier une pièce d'oeuvre

(84) Designated Contracting States:
**DE FR GB**

(30) Priority: **27.03.1992 JP 102303/92**
**30.09.1992 JP 287003/92**

(43) Date of publication of application:
**29.09.1993 Bulletin 1993/39**

(73) Proprietor: **TOYODA KOKı KABUSHIKı KAISHA**
**Kariya-shi Aichi-ken (JP)**

(72) Inventors:
• **Yoneda, Takao**
**Nagoya-shi, Aichi-ken (JP)**

• **Hotta, Takayuki**
**Nagoya-shi, Aichi-ken (JP)**
• **Hattori, Shiho**
**Chikusa-ku, Nagoya-shi, Aichiken (JP)**

(74) Representative: **Pellmann, Hans-Bernd, Dipl.-Ing.**
**Patentanwaltsbüro**
**Tiedtke-Bühling-Kinne & Partner**
**Bavariaring 4**
**80336 München (DE)**

(56) References cited:
**CH-A- 558 706**          **DE-A- 3 507 538**

**Description**

BACKGROUND OF THE INVENTION

Field of the Invention:

This invention relates to a method and a machine for grinding a workpiece and, more particularly, to a method and a machine for grinding a workpiece in which a residual grinding amount is monitored for optimally controlling the infeed movement of a wheel head which carries a grinding wheel.

Discussion of the Prior Art:

In a conventional grinding machine, optimum infeed rates of the grinding wheel for successive grinding steps, namely, rough grinding, fine grinding and finish grinding are determined by repeatedly carrying out trial grinding in which the respective infeed rates are determined by an operator taking into account various conditions such as the shape of a workpiece, the kind of the grinding wheel and a desired grinding accuracy (dimensional accuracy and surface roughness). After that, each of workpieces is ground at the determined constant rates in the respective grinding steps without changing the determined infeed rates provided that the conditions do not drastically change.

When the grinding wheel is fed toward a workpiece, the workpiece receives a force from the grinding wheel, whereby the workpiece is bent in the direction of the infeed. The amount of the bent becomes larger as the infeed rate of the grinding wheel increases, as the stiffness of the workpiece becomes lower, or as the sharpness of the grinding wheel decreases due to wear of the grinding wheel. When the amount of the bent becomes larger, the surface roughness of the workpiece also becomes larger, whereby the dimensional accuracy is deteriorated.

Accordingly, in cases where workpieces are ground at constant rates regardless of the sharpness of the grinding wheel, the dimensional accuracy of the workpieces are gradually deteriorated. Therefore, it is difficult for the conventional grinding machine to maintain a high machining accuracy.

Further, there is a need to change the cycle time of grinding operation, surface roughness or dimensional accuracy. In such case, the infeed rate must be changed to satisfy these requirement. However, it is difficult for an operator to properly change the infeed rate, because he or she does not know how much the dimensional accuracy varies.

Document DE 35 07 538 A1 discloses a method and a machine for grinding a cylindrical workpiece with a grinding wheel according to the preamble of the independent method and apparatus claims, respectively.

According this prior art, a size-controlled stop mode may be selected, in which a process-controlled operation is switched to a size-controlled operation as soon as the remaining grinding amount of the workpiece according to the present NC data is smaller than a slowing-down path of the servo motor used for feeding the grinding wheel.

In the size-controlled operation, the infeed rate is controlled according to the remaining grinding amount obtained by calculating the difference between a measured dimension of the workpiece in a radial direction thereof supplied from a sensor and a present nominal (theoretical) dimension of the workpiece stored in a memory and updated by the control means on the basis of the infeed rate. The theoretical dimension of the workpiece may only be calculated by accumulating nominal feeding increments.

This, however, leads to the above mentioned drawback that the dimensional accuracy of the workpiece is gradually deteriorated as the amount of bent of the workpiece becomes larger, e.g. due to decreased sharpness of the grinding wheel or lowered stiffness of the workpiece.

It is therefore an object of the present invention to provide a grinding method and machine by means of which the grinding accuracy can be improved.

The object is alternatively achieved by a grinding method and machine as claimed in claims 1, 2, 6, 7, 12, 13, 14 and 15, respectively.

Accordingly, since the theoretical dimension of the workpiece is calculated on the basis of a detected actual position of the grinding wheel, the amount of bent of the workpiece can be taken into consideration when the difference between the theoretical and the measured dimension is calculated.

Therefore, the residual grinding amount can be optimally controlled to thereby enable an efficient grinding of the workpiece with high machining accuracy regardless of a change in sharpness of the grinding wheel or a change in stiffness of the workpiece.

The change value of the infeed rate is obtained by a simple mathematical calculation in some preferred embodiments. In such embodiments, the change value is calculated based on not only the detected residual grinding amount, but also data indicating a desirable residual grinding amount.

In other embodiments, the change value is obtained by fuzzy inference in which various parameters indicating grinding conditions are used as input variables. Examples of the parameters include the residual grinding amount, a change amount of the residual grinding amount, a deviation of the residual grinding amount with respect to a target residual grinding amount, a change amount of the deviation, a change amount of cycle time and change amount of accuracy. These parameters are selectively used as the input variables in the embodiments. The output valuable of the fuzzy inference, which is used as the change value, is a change rate of the infeed rate or a change rate of the target value of the residual grinding amount. The infeed rate is controlled directly or indirectly in accordance with the change value.

BRIEF DESCRIPTION OF THE ACCOMPANYING DRAWINGS

Various other objects, features and many of the attendant advantages of the present invention will be readily appreciated as the same becomes better understood by reference to the following detailed description of the preferred embodiments when considered in connection with the accompanying drawings, in which:

FIG. 1 is a plan view of a grinding machine which is used in the present invention:

FIG. 2 is a block diagram showing the structure of the numerical controller in accordance with a first embodiment of the present invention;

FIG. 3 is a flowchart showing the operation of the CPU shown in FIG. 2;

FIG. 4 is an explanatory chart showing a relationship between the present position of a grinding wheel and the diameter of a workpiece;

FIG. 5 is a flowchart showing the operation of the CPU according to the second embodiment;

FIGS. 6 (a) and 6 (b) are flowcharts showing the operation of the CPU according to the third embodiment;

FIG. 7 is a block diagram showing the structure of the numerical controller used in fourth through seventh embodiments;

FIG. 8 is a flowchart showing the operation of the CPU according to the fourth embodiment;

FIG. 9 is an explanatory chart showing fuzzy rules according to the fourth embodiment;

FIG. 10 is a characteristic chart showing the input functions of the fuzzy rules;

FIG. 11 is a characteristic chart showing the output functions of the fuzzy rules;

FIG. 12 is a flowchart showing the processing for fuzzy inference;

FIGS. 13 and 14 are explanatory charts showing the method of the fuzzy inference;

FIG. 15 is an explanatory chart showing fuzzy rules according to the fifth embodiment;

FIG. 16 is a flowchart showing the operation of the CPU according to the fifth embodiment;

FIG. 17 is an explanatory chart showing fuzzy rules according to the sixth embodiment;

FIG. 18 is a flowchart showing the operation of the CPU according to the sixth embodiment; and

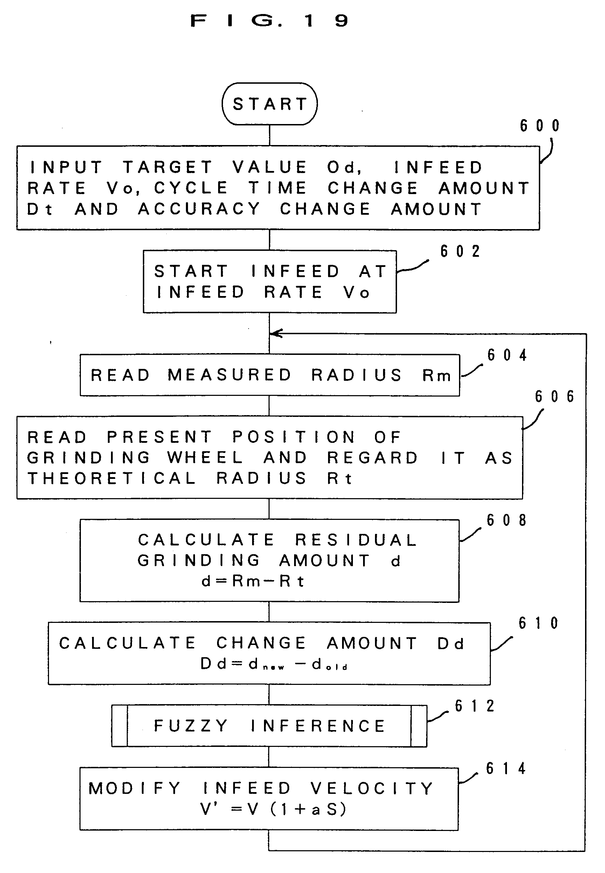

FIG. 19 is a flowchart showing the operation of the CPU according to the seventh embodiment.

DETAILED DESCRIPTION OF PREFERRED EMBODIMENTS

Preferred embodiments of the present invention will now be described with reference to drawings.

Fist Embodiment:

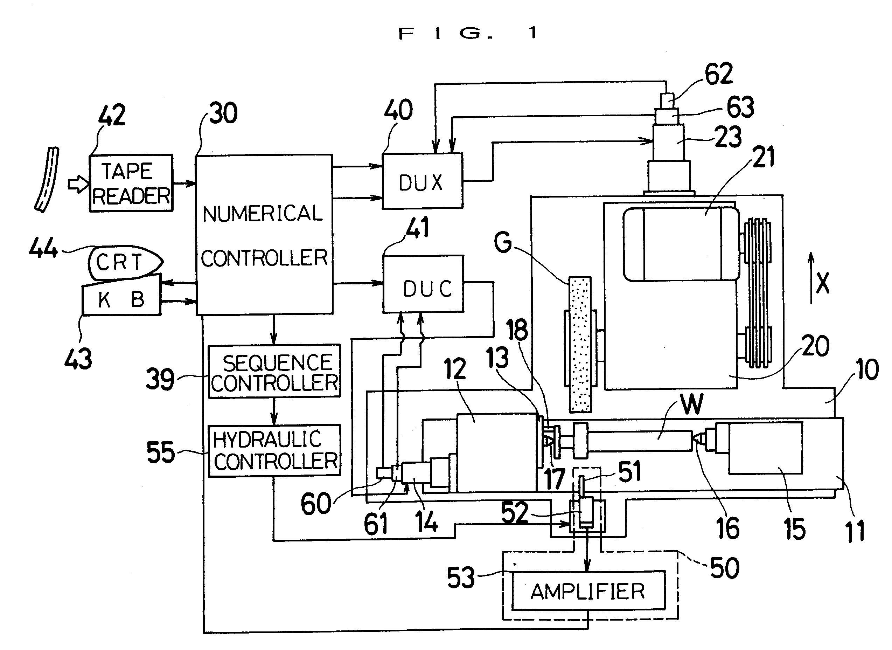

In FIG. 1, numeral 10 indicates a bed of a grinding machine on which a table 11 is mounted for slide movement. Mounted on the table 11 are a spindle head 12, which carries a spindle 13 driven by a servomotor 14, and a tailstock 15. A workpiece W is supported by a center 17 of the main spindle 13 and a center 16 of the tailstock 15. The workpiece W is engaged with a locating pin 18 protruding from the main spindle 13, so that the rotational phase of the workpiece W coincides with the rotational phase of the main spindle 13.

A wheel head 20 is mounted on the bed 10 at its rear portion for advance and retract movements against the workpiece W. The wheel head 20 supports a grinding wheel G which is rotated by a motor 21. The wheel head 20 is advanced and retracted by a screw feed mechanism (not shown) which is driven by a servomotor 23.

Further, a measuring device 50 is provided for measuring the diameter of the workpiece W. The measuring device 50 is composed of a measuring head 52 having a pair of probes 51, and an amplifier 53. The measuring head 52 includes a differential transformer which outputs a measurement signal corresponding to the distance between the pair of probes 51, namely, the diameter of the workpiece W. The measurement signal is output to a numerical controller 30 through the amplifier 53. The measuring head 52 is advanced and retracted toward the workpiece by a hydraulic cylinder (not shown) which is controlled by a hydraulic controller 55.

Drive units 40 and 41 are devices for driving the servomotors 23 and 14 in accordance with the positioning command data from the numerical controller 30. The servomotors 23 and 14 are individually provided with tachometer generators 63 and 61 for detecting the rotational speeds of the servomotors 23 and 14, and encoders 62 and 60 for detecting the rotational positions of servomotors 23 and 14. Signals output from these tachometer generators and encoders are fed back to the drive units 40 and 41. These drive units 40 and 41 are individually provided therein with registers for memorizing the present position of the grinding wheel G and the present rotational angle of the main spindle 13, respectively. The contents of the registers are updated in response to the outputs of the encoders 62 and 60. The numerical controller 30 detects the present position of the grinding wheel G and the present rotational angle of the workpiece W with reference to the registers.

The numerical controller 30 operates to numerically control the rotation of the servomotor 14 and 23, whereby the grinding operation for the workpiece W is controlled. Connected to the numerical controller 30 are a tape reader 42 for inputting a machining program and the like, a keyboard 43 for inputting control data and the like, and a CRT display device 44 for displaying various information. The keyboard 43 is also used as an operation panel through which operation commands such as a start command are input.

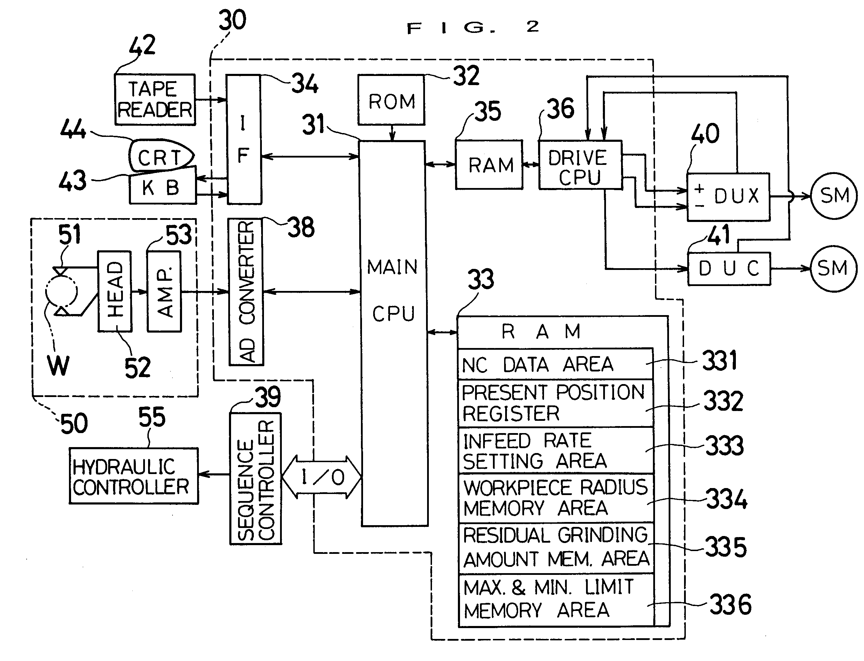

FIG. 2 is a block diagram showing the structure of the numerical controller 30. The numerical controller 30 is composed of a main CPU 31, a ROM 32 for storing a control program, a RAM 33 for storing various data, an interface 34 and an AD converter 38.

The output signal of the measuring device 50 is transmitted to the main CPU 31 through the AD converter 38, so that a digital signal indicating the present diameter of the workpiece W is supplied to the main CPU 31. A sequence controller 39 is also connected to the main CPU 31 through an I/O port. The sequence controller 39 controls various sequential operations including the advance and retract movements of the measuring head 52.

In the numerical controller 30, there are further provided a RAM 35 and, a drive CPU 36 in order to drive the servomotors 14 and 23. The RAM 35 operates to store positioning data output from the main CPU 31. The drive CPU 36 carries out the processing for interpolation and slow-up and slow-down operation using the positioning data, so that target position data for respective interpolated positions are output at a predetermined interval. The target position data output from the drive CPU 36 are transmitted to the drive units 40 and 41.

In the RAM 33, there are formed a NC data area 331, a present position register 332, an infeed rate setting area 333, a workpiece radius memory area 334, a residual grinding amount memory area 335 and a maximum/minimum limit memory area 336. The NC data area 331 memorizes NC programs. The present position resister 332 memorizes the present position of the grinding point of the grinding wheel G. The infeed rate setting area 333 memorizes an infeed rate of the wheel head 20. The workpiece radius memory area 334 memorizes the radius of the workpiece W measured by the measuring device 50. Since the measuring device 50 outputs the dimension of the workpiece as a diameter, the CPU 31 divides the dimension of the workpiece W to store the radius of the workpiece W in the memory area 334. The residual grinding amount memory area 335 stores a value indicating a residual grinding amount which will be described hereinafter. The maximum/minimum limit memory area 336 memorizes a maximum limit value and a minimum limit value which indicate a preferable range regarding the residual grinding amount.

The drive CPU 36 accesses the resisters in the drive units 40 and 41 at a predetermined interval to read out the present position of the wheel head 20 and the present rotational angle of the main spindle 13. The present position and present rotational angle thus read out are stored in the RAM 35. The present position indicates a position of the wheel head 20 with respect to the machine origin. When the grinding point of the grinding wheel G is moved to a known reference position, the present position resister 332 is reset to store a value indicating the position of the grinding point of the grinding wheel G with respect to the rotational axis of the main spindle 13. After that, the value stored in the present position resister 332 is updated in real time in accordance with the movement of the wheel head 20. This update operation is carried out with reference to the present position stored in the RAM 35. Therefore, the CPU 31 can detect the present position of the grinding point of the grinding wheel G by referring the content of the present position resister 332. Hereinafter, the present position of the grinding point of the grinding wheel G is simply called as "present position of the grinding wheel G".

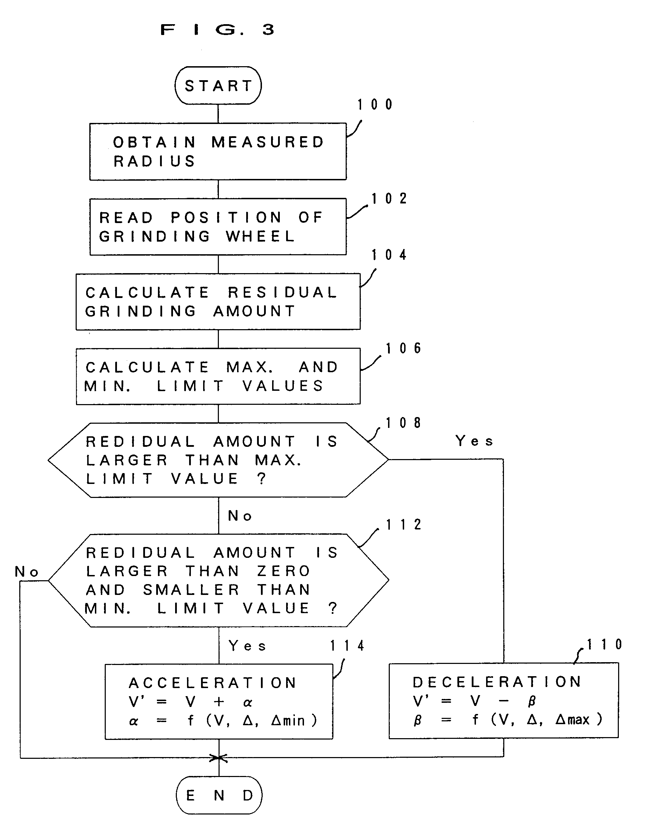

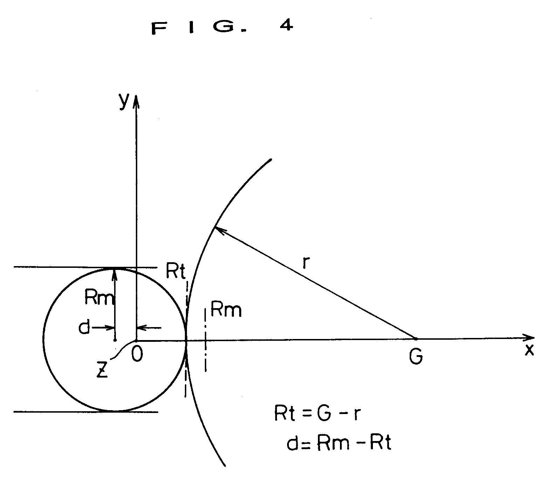

The operation of the CPU 31 will be now explained with reference to the flow chart shown in FIG. 3, and an explanatory chart shown in FIG. 4 indicating a relationship between the present position of the grinding wheel G and the radius of the workpiece W.

The processing shown by the flowchart is repeated at a predetermined interval during a grinding cycle, for example, in the rough infeed step of the grinding cycle.

At step 100, the dimension 2Rw of the workpiece W which is measured by the measuring device 50 during the grinding operation, is read by the main CPU 31. The radius Rm of the workpiece W is then calculated and stored in the workpiece radius memory area 334.

After moving to next step 102, the present position of the grinding wheel G, namely, the position of the grinding point with respect to the rotational axis of the main spindle 13 is read out from the present position resister 332. The present position thus obtained indicates a theoretical radius Rt, as shown in FIG. 4. In the event that the workpiece W has a very high stiffens and is not bent, the measured radius Rm of the workpiece W coincides with the theoretical radius Rt.

A difference between the measured radius Rm of the workpiece W and the theoretical radius Rt is indicated as a residual grinding amount d. The residual grinding amount d thus calculated is memorized in the residual grinding amount memory area 335 of the RAM 33.

Due to the existence of the residual grinding amount, the periphery of the grinding wheel G interferes with the workpiece W whereby the surface of the workpiece W is ground by the grinding wheel G.

At next step 106, a maximum limit value dmax and a minimum limit value dmin are calculated based upon the commanded standard infeed rate Vo of the wheel head 20 stored in the infeed rate setting area 333 of the RAM 33. The maximum limit value dmax and minimum limit dmin indicate a preferable range regarding the residual grinding amount calculated at step 104. Namely, when the grinding condition is good, the following relationship is satisfied:

$$dmin < d < dmax$$

The maximum limit value dmax and minimum limit value dmin are memorized in the maximum/minimum limit memory area 336.

These limit values dmax and dmin are calculated using the following equation:

$$dmax = k1 * Vo$$

$$dmin = k2 * Vo$$

where Vo indicates the commanded standard infeed rate, k1 indicates a constant used for the calculation of the maximum limit value, and k2 indicates a constant used for the calculation of the minimum limit value. The constants k1 and k2 are determined by carrying out experiments. The limit values dmax and dmin may be determined with reference to a data table in which maximum limit values and minimum limit values corresponding to various infeed rates are memorized.

After that the processing moves to step 108, at which it is judged whether or not the calculated residual grinding amount d is larger than the maximum limit value dmax calculated at step 106. When it is judged at step 108 that the residual grinding amount d is larger than the maximum limit value dmax, it means that the grinding condition has been deteriorated because the present infeed rate V is too fast. In such case, the acceptable grinding cannot be continued unless the present infeed rate V is decreased. Therefore, the processing moves to step 110, at which the infeed rate of the wheel head 20 is decreased in accordance with the following equation:

$$V' = V - \beta$$

where $\beta = f(V, d, dmax)$, and V' indicates a new infeed rate. rate.

When it is judged at step 108 that the residual grinding amount d is not larger than the maximum limit value dmax, the processing moves to step 112, at which it is judged whether or not the calculated residual grinding amount d is larger than zero and smaller than the minimum limit value dmin calculated at step 106. When it is judged at step 112 that the residual grinding amount d is larger than zero and smaller than the minimum limit value dmin, it means that the grinding condition is good, but the machining cycle time may be prolonged because the present infeed rate is too slow. Therefore, the processing moves to step 114, at which the infeed rate of the wheel head 20 is increased in accordance with the following equation:

$$V' = V + \alpha$$

where $\alpha = f(V, d, dmin)$, and V' indicates a new infeed rate.

When the residual grinding amount d is larger than the minimum limit value dmin, it means that the residual grinding amount is preferable, namely, the present infeed rate V is proper. In such case, the processing ends without carrying the processing at step 114.

When the residual grinding amount d is smaller than zero, it means that the grinding wheel G has not been engaged with the workpiece W yet, namely, actual grinding has not been started yet. In such case, the processing ends without carrying the processing at step 114, so that the present infeed rate V is maintained.

The above-mentioned processing is repeated at the predetermined interval. A preferred value of the interval is a few hundred milliseconds which is necessary to complete the change of the infeed rate in accordance with the modified infeed rate.

Similar operation is carried out for fine grinding and finish grinding.

As described above, the infeed rate V of the wheel head 20 is changed based on the residual grinding amount during the grinding operation. Therefore, a high grinding accuracy is stably obtained regardless of a change of the sharpness of the grinding wheel G, and the cycle time of the grinding operation is also shortened.

Second Embodiment:

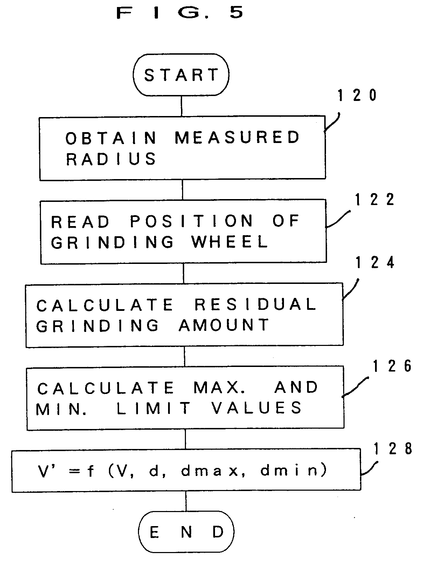

A second embodiment will be now described with reference to the flowchart shown in FIG. 5.

The second embodiment is almost same as the first embodiment, excepting for the operation of the main CPU 31. Therefore, only the operation of the main CPU 31 will be explained. A residual grinding amount and maximum and minimum limit values are obtained by the processing at steps 120 through 126, which is the same process as that at step 100 through 106. After that, the processing moves to step 128, at which an new infeed rate is calculated by the following equation:

$$V' = f(V, d, dmax, dmin)$$
$$= V * \frac{(dmax + dmin)/2}{d}$$

The current infeed rate V of the grinding wheel G is then changed in accordance with the new infeed rate V'.

In this embodiment, advantages similar to those of the first embodiment can be obtained.

Third Embodiment:

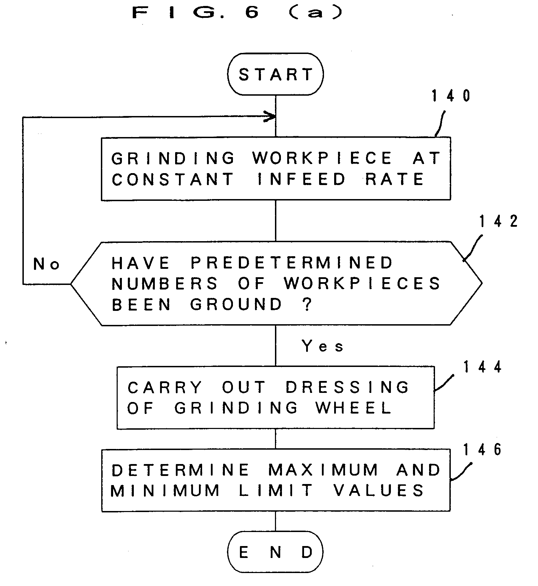

A third embodiment will be now described with reference to the flowcharts shown in FIGS. 6 (a) and 6 (b).

The processing shown in FIG. 6 (a) is initially carried out. At step 140, a normal grinding cycle is carried out for grinding a workpiece. In the normal grinding cycle, the grinding wheel G is infed at a predetermined constant infeed rate, and the infeed rate is changed step-by-step as the grinding step proceeds from the rough grinding to fine grinding, and then to finish grinding. During the rough grinding, fine grinding and finish grinding, residual grinding amount is detected and the maximum value and the minimum value in each of the rough grinding, fine grinding and finish grinding are memorized. At step 142, it is judged whether or not a predetermined number of workpieces have be ground. The number is determined based upon a normal dress interval. When it is judged at step 142 that the predetermined number of workpieces have not been ground yet, the processing moves back to step 140 to repeat the grinding cycle. With this operation, plural sets of maximum values and minimum values are memorized for each of the rough grinding, fine grinding and finish grinding.

When it is judged at step 142 that the predetermined number of workpieces have been ground, the processing proceeds to step 144, at which a dressing operation is carried out to dress the grinding wheel G. After that, the processing moves to step 144, at which processing is carried out for each of rough, fine and finish grinding steps to select a largest one of the memorized maximum values as a maximum limit value dmax, and a smallest one of the memorized minimum values as a minimum limit value dmin.

After the above operation, the grinding is carried out in the adaptive control mode. In this mode, workpieces are also ground by rough grinding, fine grinding and finish grinding. In the rough grinding, the processing shown in FIG. 6 (b) is repeatedly executed at a predetermined interval. By the processing at steps 150 through 154, which is the same as that at steps 120 through 124 in the second embodiment, a residual grinding amount d is detected. At step 158, the present infeed rate V is changed based on the residual grinding amount d to a new infeed rate V'. The new infeed rate V' is calculated using an equation which is the same as that used at step 128.

Then, similar operation is repeated for fine grinding and finish grinding. In this embodiment, advantages similar to those of the first embodiment can be obtained.

Fourth Embodiment:

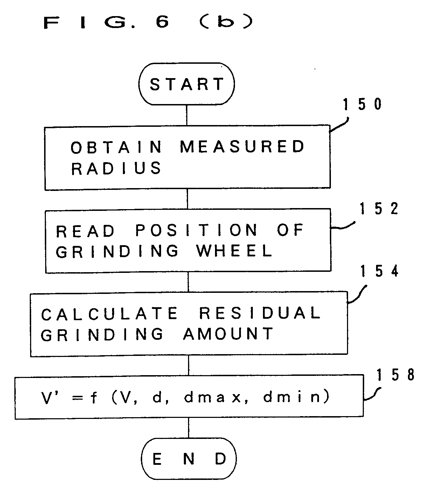

A fourth embodiment will now be explained with reference to FIGS. 7 through 14. FIG. 7 is a block diagram showing the structure of the numerical controller 30. The structure of the numerical controller 30 is the same as that in the first embodiment except for the contents of the RAM 33.

In the RAM 33, there are formed a NC data area 331, a present position resister 332, a data setting area 333, an infeed rate setting area 334 and a fuzzy rule area 335. The NC data area 331 memorizes NC programs. The present position resister 332 memorizes the present position of the grinding point of the grinding wheel G. The data setting area 333 memorizes various data necessary for carrying out grinding operation, the data including a stiffness value A of the workpiece W, a grinding wheel constant B, an accuracy constant C and a standard infeed rate Vo. The fuzzy rule area 335 memorizes fuzzy rules.

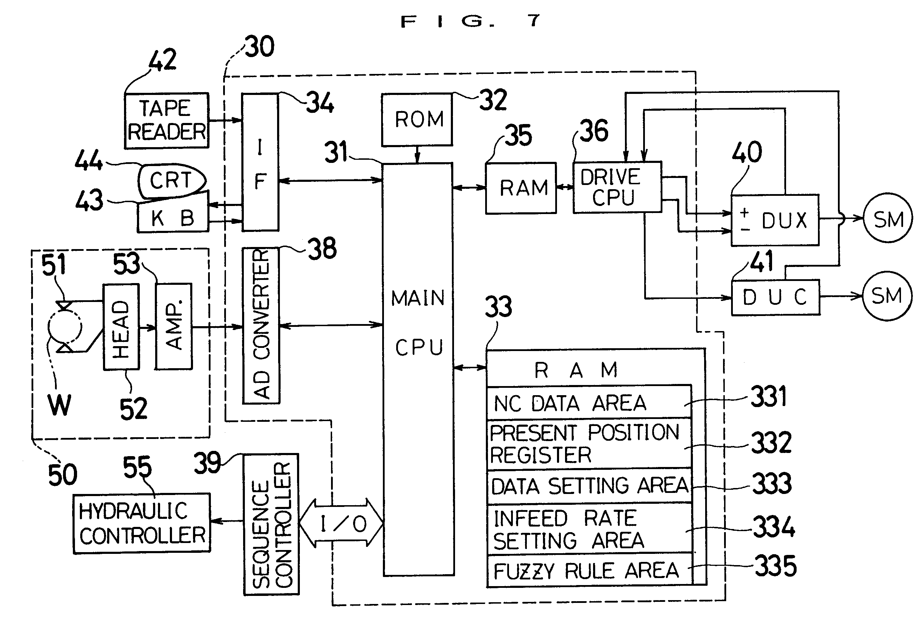

The operation of the main CPU 31 will be now explained with reference to the flowchart shown in FIG. 8.

When the start of the grinding operation is commanded by an operator, the CPU 31 reads out the NC program from the NC data area 331 of the RAM 33 block by block.

When a data block commanding the execution of rough grinding is read out, the CPU 31 executes the flowchart shown in FIG. 8.

At step 200, the CPU 31 read out from the RAM 33 data indicating the shape of a workpiece to be ground, the kind of the grinding wheel G, a required accuracy (dimensional tolerance, surface roughness), and a standard infeed rate (commanded infeed rate) Vo. At step 202, the stiffness value A of the workpiece W is calculated. The stiffness value A is calculated, using the contact position of the grinding wheel G with the workpiece W as a parameter, by geometrically analyzing the condition in which the grinding wheel is contacted with a workpiece having a shape defined by input data (diameters and axial lengths of plural portions of the workpiece) is supported by the centers 16 and 17.

At next step 204, a wheel constant B is calculated. The wheel constant B is determined based on the kind of grinding wheel G and indicates the sharpness of the grinding wheel G. At step 206, an accuracy constant C is determined. The accuracy constant C is determined based upon the dimensional tolerance and the surface roughness obtained at step 200. The accuracy constant C becomes larger as the dimensional tolerance and surface roughness have smaller values. The above-mentioned stiffness value A, wheel constant B and accuracy constant C are normalized to have values between 0 to 1.

At next step 208, the standard infeed rate Vo is memorized in the infeed rate setting area 334, as a present infeed rate V. After that, the servomotor 23 is driven at a speed corresponding to the infeed rate V, in accordance with the numerical control program memorized in the NC data area 331, whereby the grinding wheel is fed toward the workpiece W at the infeed rate V. By the processing at steps 210 through 214, a residual grinding amount d is detected. Since the processing at steps 210 through 214 is similar to that at steps 100 through 104, the detailed explanation will be omitted.

At step 216, a calculation is carried out to obtain a difference between a new residual grinding amount dnew and an old residual grinding amount dold which has been stored in the RAM 33 during the previous calculation. The difference is memorized in the RAM 33 as a change amount Dd of the residual grinding amount. The new residual grinding amount dnew is also memorized in the RAM 33 as the old residual grinding amount dold.

At step 218, a fuzzy inference is carried out using the stiffness value A, wheel constant B, accuracy constant C, residual grinding amount d and change amount Dd as input variables so as to obtain a change rate S of infeed rate (hereinafter referred to as "infeed change rate") as an output variable. At step 220, the current infeed rate V memorized in the infeed rate setting area 334 is modified in accordance with the change rate S and a gain constant a so that a new command infeed rate V is determined. After that the infeed of the grinding wheel G is continued at a speed corresponding to the new command infeed rate V'. The processing thereafter moves back to step 210 to repeat the above-mentioned control for modifying the infeed rate of the grinding wheel G.

Further, the main CPU 31 executes another control program at a minute time interval in response to real time clock signals to read out the present position of the grinding wheel G from the present position resister 332, and judges whether or not the grinding wheel G reaches a target position. When it is judged that the grinding wheel G reaches the target position, the execution of the processing shown in FIG. 8 is stopped. With this operation, the rough grinding is completed.

After that, a next data block of the NC program for fine grinding is read out from the NC data area 331. For fine grinding, the processing is executed from the step 208, at which a command infeed velocity for fine grinding is set as the standard infeed velocity Vo. After that, the infeed movement of the grinding wheel G is started. By the processing at steps 210 through 220, the infeed rate is modified so as to grind the workpiece optimally.

The same processing is again carried out for fine grinding. When a new workpiece is ground, the processing is executed form the step 200. In the event that, the new workpiece is the same as the previous workpiece the processing may be executed from step 208, because it is not necessary to calculate the stiffness value A, wheel constant B and accuracy constant C.

Next, the fuzzy inference carried out at step 218 will be explained in detailed.

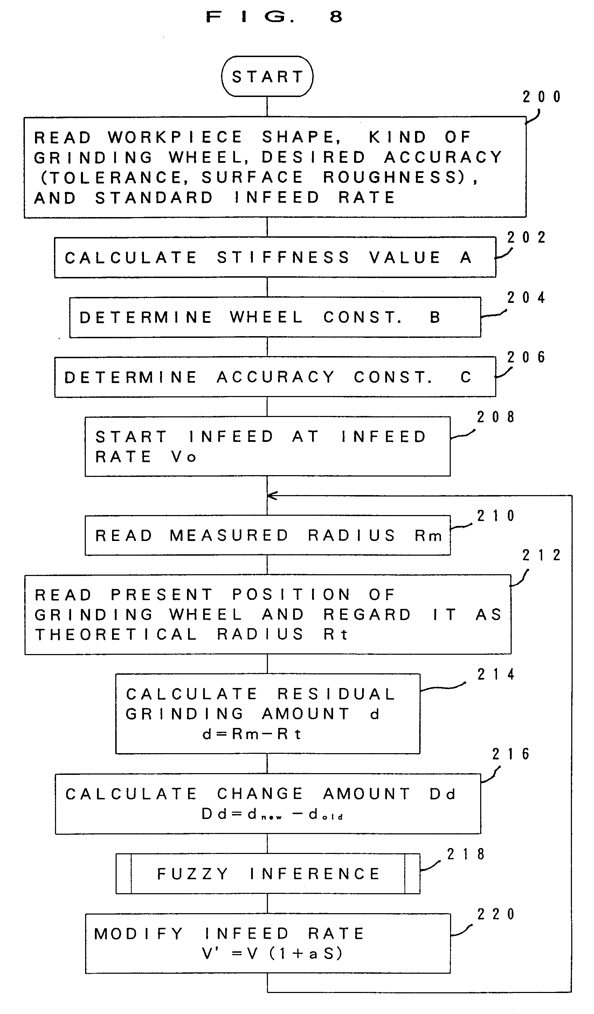

Fuzzy rules shown in FIG. 9 are memorized in the fuzzy rule area 335 of the RAM 33. The fuzzy rules are given in "IF-THEN" format as follows:

if $I1=L1(k1)$ and $I2=L2(K2)$ and, ... and $In=Ln(kn)$
then $O1=OL1(j1)$ and $O2=OL2(j2)$ and, ... and $Om=OLm(jm)$

where $I1$-$In$ are input variables, n is the number of the input variables, $O1$-$Om$ are output variables and m is the number of the output variables. In this embodiment, the input variables are the stiffness value A, wheel constant B, accuracy constant C, residual grinding amount d and change amount Dd of residual grinding amount d, and n is 5. Further, the output variable is the infeed change rate S, and m is 1. $L1(k1)$ - $Ln(kn)$ and $OL1(j1)$ - $OLm(jm)$ are symbols each indicating a rank or a membership function. The membership function is a function indicating the relationship between any one of the input variables and output variables, and the fitness degrees indicating the degree of fitness or probabilities at which the variable belong to respective ranks. For example, the rule No. 1 indicates that if the stiffness value A is large, wheel constant B is large and residual grinding amount d is large, the infeed rate must be decreased by a large amount.

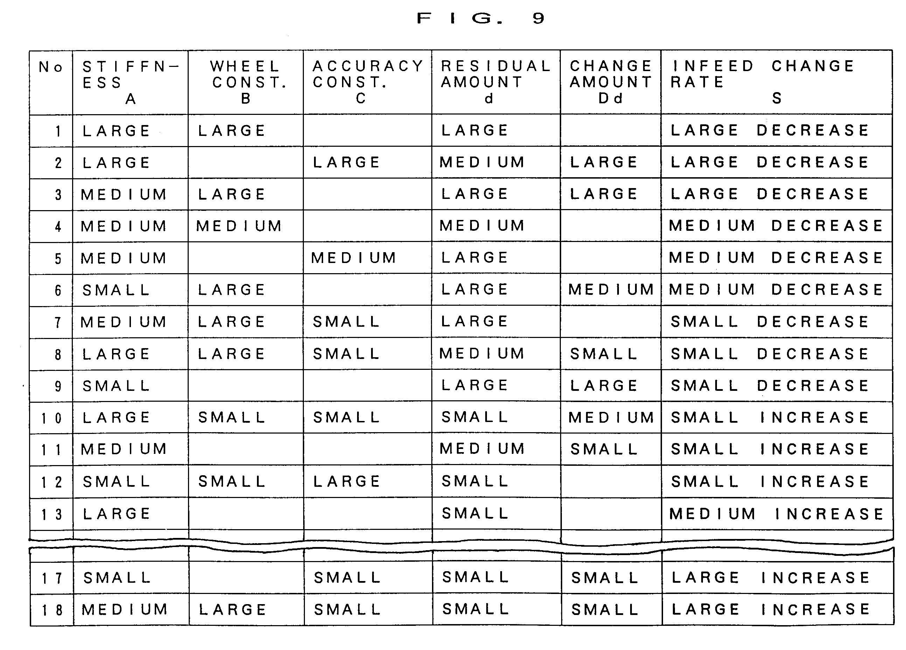

FIG. 10 shows input membership functions defining the relationship between the stiffness value A and a fitness degree $M_A$. The input membership functions are functions for inferring the fitness degree $M_A$ regarding the magnitude of stiffness A from the stiffness value A, and is composed of three kinds of functions representing the following ranks regarding the magnitude of stiffness.

S : small
M : middle
L : large

Similarly, there are provided three kinds of functions which represents the ranks of the magnitude for each of the wheel constant B, accuracy constant C, residual grinding amount d and change amount Dd of residual grinding amount d. These three kinds of functions are not necessarily the same for the respective input valuables.

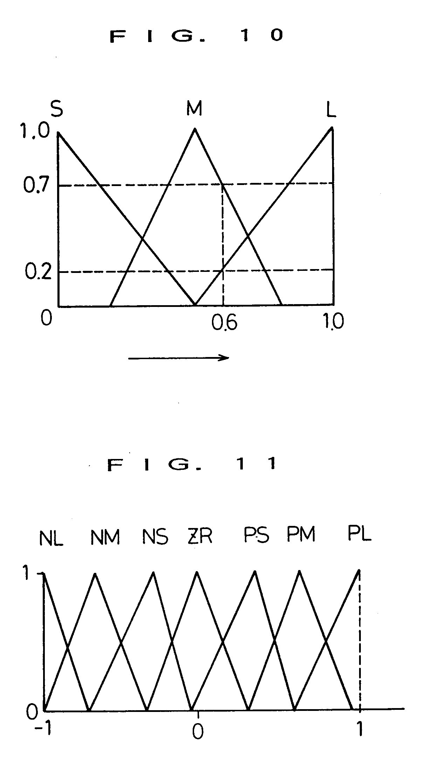

FIG. 11 shows output membership functions defining the relationship between the infeed change rate S (output variable) and a fitness degree $M_S$ indicating the degree of fitness or probability at which the output variable belongs to the respective ranks. There are seven kinds of functions as follows:

PL : large increase
PM : medium increase
PS : small increase
ZR : no change
NS : small decrease
NM : medium decrease
NL : large decrease

The infeed change rate S is determined from the fitness degrees of respective fuzzy rules which are determined based on the ranks of the five input variables, and the infeed change rate S thus determined indicates an optimal change rate of the infeed rate.

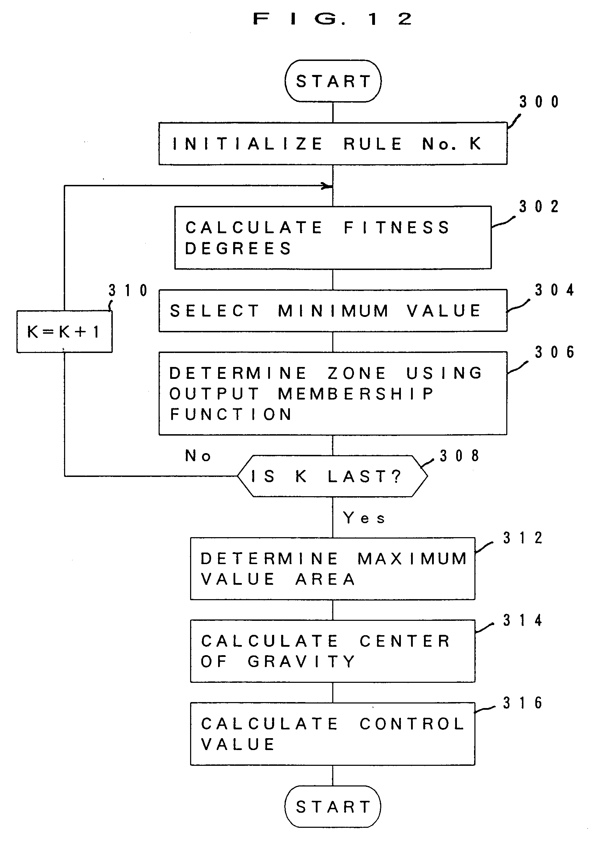

Next, the processing for the fuzzy inference will be explained with reference to FIG. 12.

At step 300, a parameter K indicating a rule number is reset to 1. At step 302, with respect to a rule of rule number K, the values of membership functions (fitness degrees $M_A$, $M_B$, $M_d$ and $M_{Dd}$), which are defined by the rule, are calculated for each of the input variables. At next step 304, a minimum value is selected from the values of the membership functions, and the selected value is regarded as a fitness degree M (MIN-calculation). At step 306, a graph for the output function of the rule No. K is supposed, and a area Z1 below the fitness degree M is determined, as shown in FIG. 13.

At step 308, it is judged whether or not the rule number k is the last rule number. When the rule number K is not the last rule number, the processing moves to step 310, at which the rule number K is renewed by the addition of 1. The processing then moves back to step 302, to repeat the same processing for a rule having a next rule number.

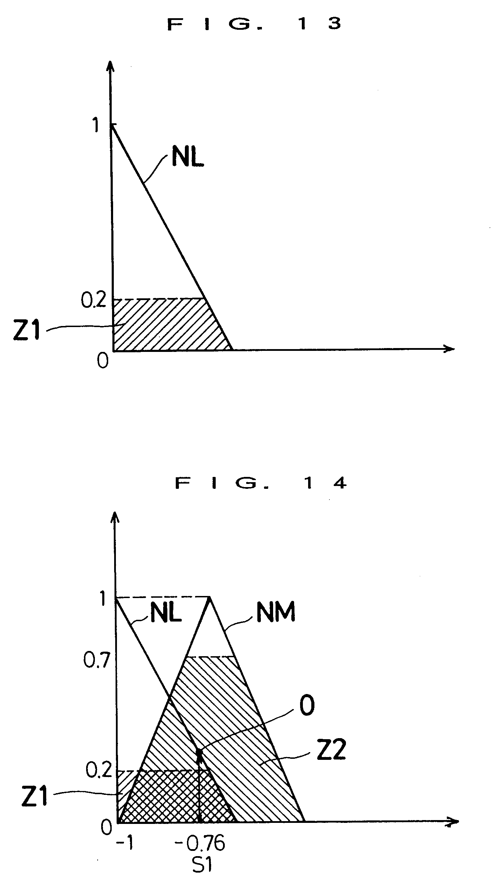

When the above-mentioned processing has been executed for all the rules, the processing moves from step 308 to step 312, at which an area are determined, as shown in FIG. 14, by compounding the areas of the respective membership functions for the respective rules (Max-calculation). At next step 314, the center of gravity O of the compounded area (Z1+Z2) is calculated. Then, at step 316, an infeed changing rate S1 corresponding to the center of gravity O is determined as a control value corresponding to the five input variables. The infeed change rate S1 is used at the step 220, whereby the infeed rate of the grinding wheel is modified.

This fuzzy control will be explained in more detail.

Considering an example in which stiffness value A is 0.6, wheel constant B is 0.7, accuracy constant C is 0.5, residual grinding amount d is 0.8, and change amount Dd is 0.4, the fitness values (fitness degrees $M_A$, $M_B$, $M_C$, $M_d$ and $M_{Dd}$) of the respective input functions of the first rule is calculated as (0.2, 0.3, 1, 0.7, 1). Fitness degrees of some input variables for which no input functions are defined in the rule are treated as zero. The above-mentioned MIN-calculation determines that the fitness degree M of the first rule is 0.2, which is the minimum value of the fitness degrees. Since the output function of the first rule is NL (large decrease), a zone Z1 is determined in the function, as shown in FIG. 13 to be smaller than the fitness degree, 0.2.

By applying the same calculation to the second rule, it is found that the fitness degree $M_C$ of the input function L (large) becomes zero because the accuracy constant C is 0.5. The fitness degree M of the second rule therefore becomes zero. Since the fitness degree $M_{Dd}$ indicated by the input function of the change amount Dd also becomes zero in the third rule, the fitness M of the third rule also becomes zero. Further, in the fifth rule, the fitness degrees $M_A$, $M_B$, $M_C$, $M_d$ and $M_{Dd}$ represented by the respective input functions of the first rule are calculated as (0.7, 1, 1, 0.9, 1), and the fitness degree of the fifth rule becomes 0.7. As a result, a zone Z2 is determined for the output function NM (medium decrease) of the fifth rule to be smaller than the fitness degree of 0.7, as shown in FIG. 14. In this case, all the fitness degrees of sixth through eighteenth rules are zero. Therefore, the center of gravity O of the area corresponding to the addition set of the areas Z1 and Z2 shown in FIG. 14 is calculated by the MAX-calculation, whereby an infeed change rate S1 corresponding to the center of gravity is calculated as -0.76.

The present infeed rate V is then modified using a gain constant of 0.5 to decrease by about 38% with respect to the present infeed rate V. As a result, the residual grinding amount 0.8 decreases, whereby a required machining accuracy is maintained. As described above, the infeed rate of the grinding wheel is optimally controlled in real time during the grinding operation.

Fifth Embodiment:

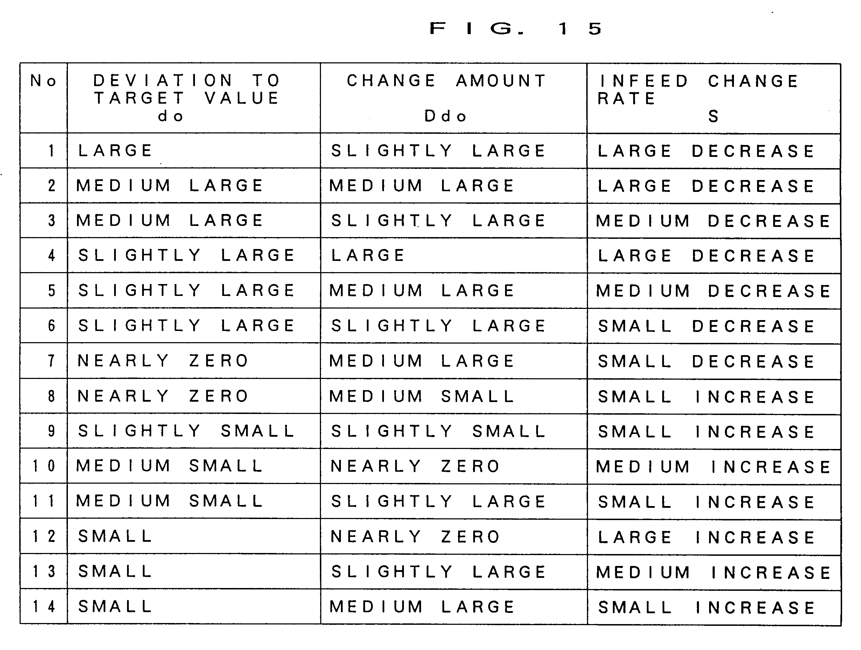

In the fifth embodiment, a deviation do of residual grinding amount with respect to a target value Od (hereinafter referred to as "deviation") and a change amount Ddo of the deviation respect to lapse of time are used as input variables for fuzzy inference. Fuzzy rules used in the fuzzy inference are constructed as shown in FIG. 15. For each of the deviation do and change amount Ddo, there are provided seven kinds of input functions, namely, L (large), ML (medium large), SL (slightly large), ZR (nearly zero), SS (slightly small), MS (medium small) and S (small). Further, there are provided seven kinds of output functions for the infeed change rate S.

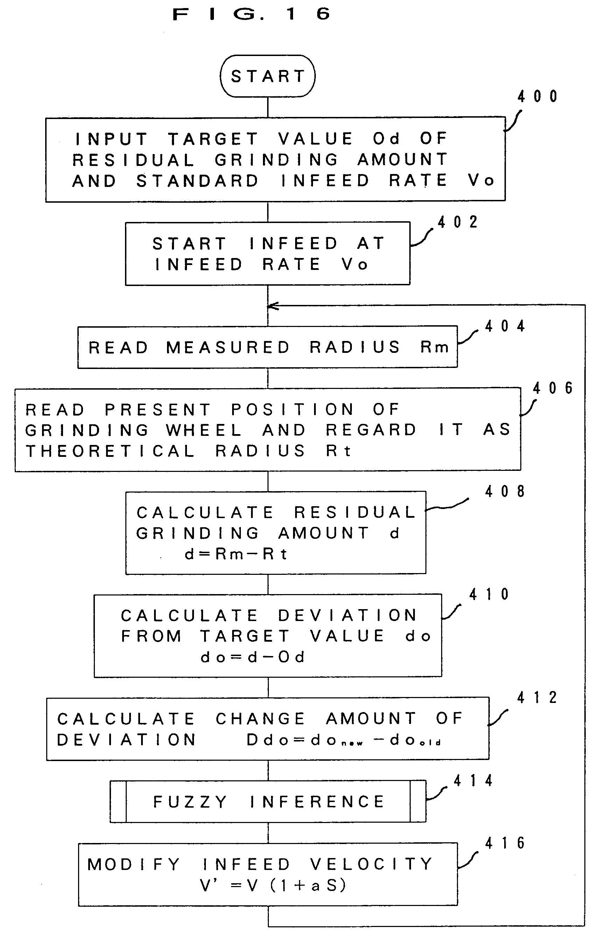

The processing of the CPU 31 is carried out in accordance with the flowchart shown in FIG. 16.

At step 400, a target value Od of the residual grinding amount and a standard infeed rate Vo are input to the data setting area 333. At step 402, the infeed rate V memorized in the infeed rate setting area 334 is preset to the standard infeed rate Vo, whereby the grinding wheel G is advanced at the standard infeed rate Vo toward a workpiece W. At step 404, a measured radius Rm of the workpiece W is read out from the RAM 33, and at step 406, the present position of the grinding wheel G is read out from the present position resister 332 of the RAM 33 to calculate a theoretical radius Rt corresponding to the present position. At next step 408, a deviation of the measured radius Rm with respect to the theoretical radius Rt is calculated as a residual grinding amount d. At step 410, a deviation do of the residual grinding amount d with respect to the target value Od is calculated. Further, at step 412, a difference between a new deviation $do_{new}$ and an old deviation $do_{old}$, which has been calculated during a previous processing and stored in the RAM 33, is as a change amount Ddo of the deviation. The value Ddo is then stored in the RAM 33, and the new deviation $do_{new}$ is stored in the RAM 33 as the old deviation $do_{old}$ for a next calculation of the change value Ddo.

At next step 414, a fuzzy inference is carried out with the deviation do and the deviation change amount Ddo being used as input variables and the infeed change rate S being its output variable. At step 416, the infeed rate V memorized in the infeed rate setting area 334 is modified with the infeed change rate S and a gain constant a to obtain a new infeed rate. After that, the grinding operation is continued at the new infeed rate. The processing then moves back to step 404 to repeat the control for the modification of the infeed rate V. With this operation, the infeed rate is changed in real time so that the residual grinding amount d approaches to the target value Od. This realizes a required cycle time and a required grinding accuracy. Further, a constant grinding accuracy is maintained regardless wear of the grinding wheel G and the material of the workpiece.

Sixth Embodiment:

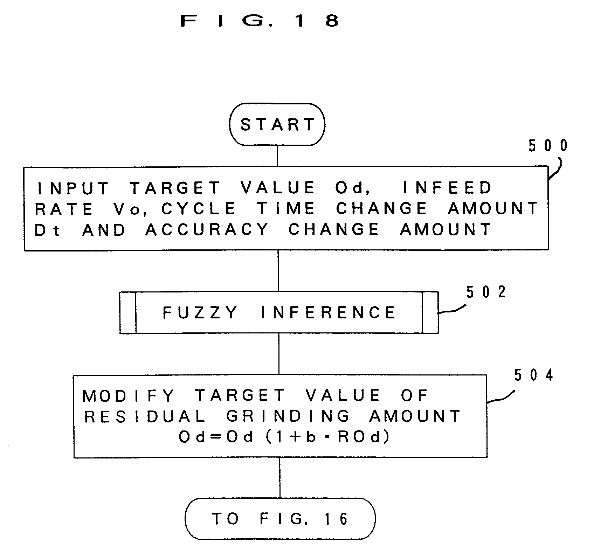

In this embodiment, the target valued Od of the residual grinding amount d, which is mentioned in the fifth embodiment, is changed in accordance with a change amount Dt of the cycle time (herein after referred to as "cycle time change amount Dt") and a change amount Dr of the accuracy (herein after referred to as "accuracy change amount Dr"). When required to change the cycle time or accuracy, the CPU 31 executes the processing shown in FIG. 18.

At step 500, a target value Od of residual grinding amount, an infeed rate V, a cycle time change amount Dt, an accuracy change amount Dr are input in the data setting area 333. At next step 502, a fuzzy inference is carried out with the infeed rate V, target value Od, cycle time change amount Dt, and accuracy change amount Dr being used as input variables and the change rate ROd of the target value Od being its output variable.

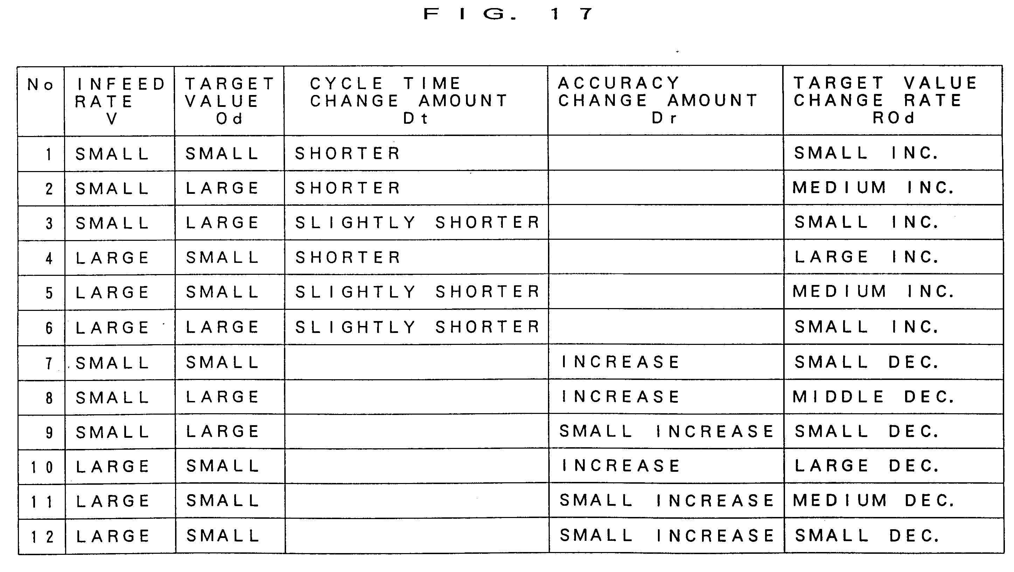

Fuzzy rules used in the fuzzy inference are shown in FIG. 17. There are provided two kinds of input functions (S:small, L:large) for each of the infeed rate V and target value Od. Also, there are provided two kinds of input functions (S:shorter, SS:slightly shorter) for the cycle time change amount Dt, and two kinds of input functions (I: increase, SI: small increase) for the accuracy change amount Dr. Similar to the change rate S of infeed rate, seven output functions are provided for the target value change rate ROd.

Using the target value change rate ROd thus obtained, a modified target value for the residual grinding amount is calculated at step 504, as follows:

$$Od = Od \times (1 + b \times ROd)$$

where b is a grain constant.

After that, the infeed control is accomplished in a manner similar to the fifth embodiment by the execution of the processing shown in FIG. 16.

The above mentioned embodiment may be modified in such a way that the infeed rate is controlled to make the detected residual amount d equal to the target value Od after the calculation of the target value Od at step 505. In such case the execution of the processing shown in FIG. 16 is not required.

With this operation, the residual grinding amount d approaches the target value Od, whereby the grinding operation is carried out which satisfies the required cycle time and accuracy.

Seventh Embodiment:

In the sixth embodiment, a fuzzy inference is carried out with the infeed rate V, target value Od, cycle time change rate Dt, and accuracy change amount Dr being used as input variables and the change rate Rod of the target value Od being its output variable. In the fifth embodiment, a fuzzy inference is carried out with the deviation do and deviation change amount Ddo being used as input variables and the infeed change rate S being its output variable. Therefore, it is possible to carry out a fuzzy inference with the infeed rate V, target value Od, cycle time change rate Dt, accuracy change amount Dr, residual grinding amount deviation do and deviation change amount Ddo being used as input variables and the infeed change rate S being its output variable. This embodiment is characterized by the execution of such fuzzy inference. Fuzzy rules can be prepared by synthesizing the fuzzy rules shown in FIGS. 15 and 17.

The processing of the CPU 31 is shown in FIG. 18.

At step 600, a residual grinding amount target value Od, a standard infeed rate Vo, a cycle time change amount Dt and an accuracy change amount Dr are input to the data setting area 333. At step 602, the infeed rate V memorized in the infeed command value area 334 is preset to a standard infeed rate Vo, whereby the grinding wheel G is advanced at the standard infeed rate Vo toward a workpiece W. At step 604, a measured radius Rm of the workpiece W is read out from the RAM 33, and at step 606, the present position of the grinding wheel G is read out from the present position resister 332 of the RAM 33 to calculate a theoretical radius Rt corresponding to the present position. At next step 608, a deviation of the measured radius Rm with respect to the theoretical radius Rt is calculated as a residual grinding amount d. At step 610, a change amount Dd of the residual grinding amount is calculated by the same process as that at step 216 in the fourth embodiment. At next step 612, a fuzzy inference is carried out with the infeed rate V, target value Od, cycle time change rate Dt, accuracy change amount Dr, residual grinding amount deviation do and deviation change amount Ddo being used as input variables and the infeed change rate S being its output variable. At step 614, the infeed rate V memorized in the infeed rate setting area 334 is modified with the infeed change rate S and a gain constant a to obtain a new infeed rate. After that, the grinding operation is continued at the new infeed rate. The processing then moves back to step 604 to repeat the control for the modification of the infeed rate V. With this operation, the infeed rate is changed in real time so that the residual grinding amount d approaches to the target value Od. This realizes a required cycle time and a required grinding accuracy.

Obviously, numerous modifications and variations of the present invention are possible in light of the above teachings. It is therefore to be understood that within the scope of the appended claims, the present invention may be practiced otherwise than as specifically described herein.

A numerical controlled grinding machine for grinding a cylindrical workpiece in which a residual grinding amount is calculated in real time from the difference between a theoretical radius and a measured radius of the workpiece. The infeed rate of the grinding wheel is changed so as to optimally control the residual grinding amount. The change rate of the infeed rate is determined by a calculation based on upper and lower limits regarding residual grinding amount, or a fuzzy inference in which the residual grinding amount, the change rate thereof and other required conditions are used as input variables.

**Claims**

1.  A method for grinding a cylindrical workpiece **(W)** with a grinding wheel **(G)**, said method comprising the steps of:

    a) effecting a relative infeed movement between said grinding wheel **(G)** and said workpiece **(W)** in a radial direction of said workpiece **(W)** at an infeed rate **(V)**;
    b) detecting a position of said grinding wheel **(G)** in said radial direction;
    c) measuring a dimension **(Rm)** of said workpiece **(W)** in said radial direction; and
    d) changing said infeed rate according to a difference between said measured dimension **(Rm)** and a theoretical dimension **(Rt)** of said workpiece **(W)** in said radial direction,
    **characterized by** the steps of:
    e) calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;
    f) calculating a residual grinding amount **(d)** based on a difference between said measured dimension **(Rm)** and said theoretical dimension **(Rt)** such that said residual grinding amount **(d)** depends on an amount of bent of said workpiece **(W)**;
    g) obtaining a change value **(S)** of said infeed rate based on said calculated residual grinding amount **(d)** and data **(dmin, dmax)** indicating a preferable residual grinding amount, wherein said infeed rate is decreased when said residual grinding amount exceeds said preferable residual grinding amount.

2.  A numerically controlled grinding machine for grinding a cylindrical workpiece **(W)**, comprising:

    a) means **(23)** for effecting a relative infeed movement between a grinding wheel **(G)** and said workpiece **(W)** in a radial direction of said workpiece **(W)** at an infeed rate **(V)**;
    b) means **(62)** for detecting a position of said grinding wheel **(G)** in said radial direction;
    c) means **(52)** for measuring a dimension **(Rm)** of said workpiece **(W)** in said radial direction; and
    d) means **(40)** for changing said infeed rate according to a difference between said measured dimension **(Rm)** and a theoretical dimension **(Rt)** of said workpiece **(W)** in said radial direction,
**characterized by**
e) means **(31)** for calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;
f) means **(31)** for calculating a residual grinding amount **(d)** based on a difference between said measured dimension **(Rm)** and said theoretical dimension **(Rt)** such that said difference depends on an amount of bent of said workpiece **(W)**; and
g) means **(30)** for obtaining a change value **(S)** of said infeed rate based on said calculated residual grinding amount **(d)** and data **(dmin, dmax)** indicating a preferable residual grinding amount, wherein said infeed rate is decreased when said residual grinding amount exceeds said preferable residual grinding amount.

3.  A numerically controlled grinding machine according to claim 2,
    **characterized in that**
    said means **(30)** for obtaining said change value comprises calculation means **(31)** for calculating said change value based on said residual grinding amount **(d)** and maximum and minimum limit values **(dmax, dmin)** indicating said preferable residual grinding amount.

4.  A numerically controlled grinding machine according to claim 3,
    **characterized in that**
    said maximum limit value **(dmax)** is calculated by multiplying a standard infeed rate **(Vo)** by a first constant **(k1)**, while said minimum limit value **(dmin)** is calculated by multiplying said standard infeed rate **(Vo)** by a second constant **(k2)**.

5.  A numerically controlled grinding machine according to claim 3,
    **characterized in that**
    said maximum and minimum limit values **(dmax, dmin)** are respectively determined based on a maximum residual grinding amount and a minimum residual grinding amount detected during a trial grinding in which a workpiece has been grounded at a predetermined constant infeed rate.

6.  A method for grinding a cylindrical workpiece **(W)** with a grinding wheel **(G)**, said method comprising the steps of:

    a) effecting a relative infeed movement between said grinding wheel **(G)** and said workpiece **(W)** in a radial direction of said workpiece **(W)** at an infeed rate **(V)**;

b) detecting a position of said grinding wheel **(G)** in said radial direction;

c) measuring a dimension **(Rm)** of said workpiece **(W)** in said radial direction; and

d) changing said infeed rate according to a difference between said measured dimension **(Rm)** and a theoretical dimension **(Rt)** of said workpiece **(W)** in said radial direction, **characterized by** the steps of:

e) calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;

f) calculating a residual grinding amount **(d)** based on a difference between said said measured dimension **(Rm)** and said theoretical dimension **(Rt)** such that said difference depends on an amount of bent of said workpiece **(W)**;

g) obtaining a change value **(S)** of said infeed rate by a fuzzy inference in which data indicating changes in grinding conditions and comprising said residual grinding amount **(d)** are used as input variables to obtain said change value as an output variable, wherein said infeed rate is decreased when said residual grinding amount increases.

7. A numerically controlled grinding machine for grinding a cylindrical workpiece **(W)**, comprising:

a) means **(23)** for effecting a relative infeed movement between a grinding wheel **(G)** and said workpiece **(W)** in a radial direction of said workpiece **(W)** at an infeed rate **(V)**;

b) means **(62)** for detecting a position of said grinding wheel **(G)** in said radial direction;

c) means **(52)** for measuring a dimension **(Rm)** of said workpiece **(W)** in said radial direction; and

d) means **(40)** for changing said infeed rate according to a difference between said measured dimension **(Rm)** and a theoretical dimension **(Rt)** of said workpiece **(W)** in said radial direction, **characterized by**

e) means **(31)** for calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;

f) means **(31)** for calculating a residual grinding amount **(d)** based on a difference between said said measured dimension **(Rm)** and said theoretical dimension **(Rt)** such that said difference depends on an amount of bent of said workpiece **(W)**; and

g) means **(30)** for obtaining a change value **(S)** of said infeed rate by a fuzzy inference in which data indicating changes in grinding conditions and comprising said residual grinding amount **(d)** are used as input variables to obtain said change value as an output variable, wherein said infeed rate is decreased when said residual grinding amount increases.

8. A numerically controlled grinding machine according to claim 7, **characterized in that** said means **(30)** for obtaining said change value **(S)** comprises means **(31)** for calculating a change amount **(Dd)** of said residual grinding amount **(d)** with respect to lapse of time, and means **(31)** for carrying out a fuzzy inference in which said residual grinding amount **(d)** and said change amount **(Dd)** of said residual grinding amount **(d)** are used as said data indicating grinding conditions to obtain said change value **(S)** of said infeed rate **(V)**.

9. A numerically controlled grinding machine according to claim 7, **characterized by** means **(331)** for setting a traget value **(Od)** of said residual grinding amount **(d)**, wherein said means **(30)** for obtaining said change value **(S)** comprises means **(31)** for calculating a deviation **(do)** of said residual grinding amount **(d)** from said target value **(Od)**, means **(31)** for calculating a change amount **(Ddo)** of said deviation **(do)** of said residual grinding amount **(d)** with respect to lapse of time, and means **(31)** for carrying out a fuzzy inference in which said deviation **(do)** of said residual grinding amount **(d)** and said change amount **(Ddo)** of said deviation **(do)** of said residual grinding amount **(d)** with respect to lapse of time are used as said data indicating grinding conditions to obtain said change value **(S)** of said infeed rate **(V)**.

10. A numerically controlled grinding machine according to claim 7, **characterized by** means **(43)** for inputting at least one of a change amount **(Dt)** of cycle time and a changing amount **(Dr)** of accuracy, wherein said means **(30)** for obtaining said change value **(S)** comprises means **(31)** for calculating a change amount **(Dd)** of said residual grinding amount **(d)** with respect to lapse of time and means **(31)** for carrying out a fuzzy inference in which said residual grinding amount **(d)** and at least one of said change amount **(Dt)** of cycle time and said chaging amount **(Dr)** of accuracy are used as said data indicating grinding conditions to obtain said change value **(S)** of said infeed rate **(V)**.

11. A numerically controlled grinding machine according to claim 7,
**characterized by**
means **(43)** for inputting at least one of a change amount **(Dt)** of cycle time and a changing amount **(Dr)** of accuracy, wherein said means **(30)** for obtaining said change value **(S)** comprises means **(31)** for carrying out a fuzzy inference in which said residual grinding amount **(d)** and at least one of said change amount **(Dt)** of cycle time and said changing amount **(Dr)** of accuracy are used as said data indicating grinding conditions to obtain a target value of said residual grinding amount **(d)** as said change value **(S)**, and wherein said means for changing said infeed rate **(V)** regards said target value as said change value so that said infeed rate **(V)** is changed in accordance with said target value to make said residual grinding amount **(d)** approach to said target value.

12. A method for grinding a cylindrical workpiece **(W)** with a grinding wheel **(G)**, said method comprising the steps of:

    a) effecting a relative infeed movement between said grinding wheel **(G)** and said workpiece **(W)** in a radial direction of said workpiece **(W)** at an infeed rate **(V)**;
    b) detecting a position of said grinding wheel **(G)** in said radial direction;
    c) measuring a dimension **(Rm)** of said workpiece **(W)** in said radial direction; and
    d) changing said infeed rate according to a difference between said measured dimension **(Rm)** and a theoretical dimension **(Rt)** of said workpiece **(W)** in said radial direction,
    **characterized by** the steps of:
    e) calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;
    f) calculating a residual grinding amount **(d)** based on a difference between said measured dimension **(Rm)** and said theoretical dimension **(Rt)** such that said residual grinding amount **(d)** depends on an amount of bent of said workpiece **(W)**;
    g) obtaining a change value **(S)** of said infeed rate based on said calculated residual grinding amount **(d)** and data **(dmin, dmax)** indicating a preferable residual grinding amount, wherein said infeed rate is increased when said residual grinding amount is below said preferable residual grinding amount.

13. A numerically controlled grinding machine for grinding a cylindrical workpiece **(W)**, comprising:

    a) means **(23)** for effecting a relative infeed movement between a grinding wheel **(G)** and said workpiece **(W)** in a radial direction of said workpiece **(W)** at an infeed rate **(V)**;
    b) means **(62)** for detecting a position of said grinding wheel **(G)** in said radial direction;
    c) means **(52)** for measuring a dimension **(Rm)** of said workpiece **(W)** in said radial direction; and
    d) means **(40)** for changing said infeed rate according to a difference between said measured dimension **(Rm)** and a theoretical dimension **(Rt)** of said workpiece **(W)** in said radial direction,
    **characterized by**
    e) means **(31)** for calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;
    f) means **(31)** for calculating a residual grinding amount **(d)** based on a difference between said measured dimension **(Rm)** and said theoretical dimension **(Rt)** such that said difference depends on an amount of bent of said workpiece **(W)**; and
    g) means **(30)** for obtaining a change value **(S)** of said infeed rate based on said calculated residual grinding amount **(d)** and data **(dmin, dmax)** indicating a preferable residual grinding amount, wherein said infeed rate is increased when said residual grinding amount is below said preferable residual grinding amount.

14. A method for grinding a cylindrical workpiece **(W)** with a grinding wheel **(G)**, said method comprising the steps of:

    a) effecting a relative infeed movement between said grinding wheel **(G)** and said workpiece **(W)** in a radial direction of said workpiece **(W)** at an infeed rate **(V)**;
    b) detecting a position of said grinding wheel **(G)** in said radial direction;
    c) measuring a dimension **(Rm)** of said workpiece **(W)** in said radial direction; and
    d) changing said infeed rate according to a difference between said measured dimension **(Rm)** and a theoretical dimension **(Rt)** of said workpiece **(W)** in said radial direction,
    **characterized by** the steps of:
    e) calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;

f) calculating a residual grinding amount **(d)** based on a difference between said said measured dimension **(Rm)** and said theoretical dimension **(Rt)** such that said difference depends on an amount of bent of said workpiece **(W)**;

g) obtaining a change value **(S)** of said infeed rate by a fuzzy inference in which data indicating changes in grinding conditions and comprising said residual grinding amount **(d)** are used as input variables to obtain said change value as an output variable, wherein said infeed rate is increased when said residual grinding amount decreases.

15. A numerically controlled grinding machine for grinding a cylindrical workpiece **(W)**, comprising:

a) means **(23)** for effecting a relative infeed movement between a grinding wheel **(G)** and said workpiece **(W)** in a radial direction of said workpiece **(W)** at an infeed rate **(V)**;
b) means **(62)** for detecting a position of said grinding wheel **(G)** in said radial direction;
c) means **(52)** for measuring a dimension **(Rm)** of said workpiece **(W)** in said radial direction; and
d) means **(40)** for changing said infeed rate according to a difference between said measured dimension **(Rm)** and a theoretical dimension **(Rt)** of said workpiece **(W)** in said radial direction,
**characterized by**
e) means **(31)** for calculating said theoretical dimension **(Rt)** of said workpiece **(W)** on the basis of said detected position such that said theoretical dimension **(Rt)** indicates the position of a grinding point of said grinding wheel **(G)** with respect to a rotational axis of said workpiece **(G)**;
f) means **(31)** for calculating a residual grinding amount **(d)** based on a difference between said said measured dimension **(Rm)** and said theoretical dimension **(Rt)** such that said difference depends on an amount of bent of said workpiece **(W)**; and
g) means **(30)** for obtaining a change value **(S)** of said infeed rate by a fuzzy inference in which data indicating changes in grinding conditions and comprising said residual grinding amount **(d)** are used as input variables to obtain said change value as an output variable, wherein said infeed rate is increased when said residual grinding amount decreases.

**Patentansprüche**

1. Verfahren zum Schleifen eines zylindrischen Werkstücks (W) mit einer Schleifscheibe (G), wobei das Verfahren die Schritte umfaßt:

a) Bewirken einer relativen Zustellbewegung zwischen der Schleifscheibe (G) und dem Werkstück (W) in radialer Richtung des Werkstücks (W) mit einer Zustellrate (V);
b) Erfassen einer Position der Schleifscheibe (G) in der radialen Richtung;
c) Messen einer Dimension (Rm) des Werkstücks (W) in der radialen Richtung; und
d) Ändern der Zustellrate entsprechend einer Differenz zwischen der gemessenen Dimension (Rm) und einer theoretischen Dimension (Rt) des Werkstücks (W) in der radialen Richtung,
**gekennzeichnet durch** die Schritt:
e) Berechnen der theoretischen Dimension (Rt) des Werkstücks (W) auf Grundlage der erfaßten Position, so daß die theoretische Dimension (Rt) die Position eines Schleifpunkts der Schleifscheibe (G) bezüglich einer Rotationsachse des Werkstucks (W) angibt;
f) Berechnen einer Restschleifmenge (d) basierend auf einer Differenz zwischen der gemessenen Dimension (Rm) und der theoretischen Dimension (Rt), so daß die Restschleifmenge (d) von einem Biegegrad des Werkstücks (W) abhängig ist;
g) Erhalten eines Änderungswerts (S) der Zustellrate basierend auf der berechneten Restschleifmenge (d) und Daten (dmin, dmax), die eine bevorzugte Restschleifmenge angeben, wobei die Zustellrate verringert wird, wenn die Restschleifmenge die bevorzugte Restschleifmenge überschreitet.

2. Numerisch gesteuerte Schleifmaschine zum Schleifen eines zylindrischen Werkstücks (W), mit:

a) einer Einrichtung (23) zum Bewirken einer relativen Zustellbewegung zwischen einer Schleifscheibe (G) und dem Werkstück (W) in radialer Richtung des Werkstücks (W) mit einer Zustellrate (V);
b) einer Einrichtung (62) zum Erfassen einer Position der Schleifscheibe (G) in der radialen Richtung;
c) einer Einrichtung (52) zum Messen einer Dimension (Rm) des Werkstücks (W) in der radialen Richtung; und
d) einer Einrichtung (40) zum Ändern der Zustellrate entsprechend einer Differenz zwischen der gemessenen Dimension (Rm) und einer theoretischen Dimension (Rt) des Werkstücks (W) in der radialen Richtung;

**gekennzeichnet durch**

e) einer Einrichtung (31) zum Berechnen der theoretischen Dimension (Rt) des Werkstücks (W) auf Grundlage der erfaßten Position, so daß die theoretische Dimension (Rt) die Position eines Schleifpunkts auf der Schleifscheibe (G) bezüglich einer Drehachse des Werkstücks (G) angibt;

f) einer Einrichtung (31) zum Berechnen einer Restschleifmenge (d) basierend auf einer Differenz zwischen der gemessenen Dimension (Rm) und der theoretischen Dimension (Rt), so daß die Differenz von einem Biegegrad des Werkstücks (W) abhängig ist; und

g) einer Einrichtung (30) zum Erhalten eines Änderungswerts (S) der Zustellrate basierend auf der berechneten Restschleifmenge (D) und Daten (dmin, dmax), die eine bevorzugte Restschleifmenge angeben` wobei die Zustellrate verringert wird, wenn die Restschleifmenge die bevorzugten Restschleifmenge überschreitet.

3. Numerisch gesteuerte Schleifmaschine nach Anspruch 2,
   **dadurch gekennzeichnet, daß**
   die Einrichtung (30) zum Erhalten des Änderungswerts eine Berechnungseinrichtung (31) aufweist zum Berechnen des Änderungswerts basierend auf der Restschleifmenge (d) und Maximal- und Minimal-Grenzwerten (dmax, dmin), die die bevorzugte Restschleifmenge angeben.

4. Numerisch gesteuerte Schleifmaschine nach Anspruch 3,
   **dadurch gekennzeichnet, daß**
   der Maximal-Grenzwert (dmax) durch Multiplizieren einer Standartzustellrate (Vo) mit einer ersten Konstante (k1) berechnet wird, während der Minimal-Grenzwert (dmin) durch Multiplizieren der Standartzustellrate (Vo) mit einer zweiten Konstante (k2) berechnet wird.

5. Numerisch gesteuerte Schleifmaschine nach Anspruch 3,
   **dadurch gekennzeichnet, daß**
   der Maximal- und Minimal-Grenzwert (dmax, dmin) bestimmt werden basierend auf einer während einem Probeschliff, bei dem ein Werkstück mit einer vorbestimmten konstanten Zustellrate geschliffen worden ist, erfaßten maximalen Restschleifmenge bzw. minimalen Restschleifmenge.

6. Verfahren zum Schleifen eines zylindrischen Werkstucks (W) mit einer Schleifscheibe (G), wobei das Verfahren die Schritte umfaßt:

   a) Bewirkten einer relativen Zustellbewegung zwischen der Schleifscheibe (G) und dem Werkstück (W) in radialer Richtung des Werkstücks (W) mit einer Zustellrate (V);

b) Erfassen einer Position der Schleifscheibe (G) in der radialen Richtung;

c) Messen einer Dimension (Rm) des Werkstücks (W) in der radialen Richtung; und

d) Ändern der Zustellrate entsprechend einer Differenz zwischen der gemessenen Dimension (Rm) und einer theoretischen Dimension (Rt) des Werkstücks (W) in der radialen Richtung,

**gekennzeichnet durch** die Schritte:

e) Berechnen der theoretischen Dimension (Rt) des Werkstücks (W) auf Grundlage der erfaßten Position, so daß die theoretische Dimension (Rt) die Position eines Schleifpunkts der Schleifscheibe (G) bezüglich einer Drehachse des Werkstücks (W) angibt;

f) Berechnen einer Restschleifmenge (d) basierend auf einer Differenz zwischen der gemessenen Dimension (Rm) und der theoretischen Dimension (Rt), so daß die Differenz von einem Biegegrad des Werkstücks (W) abhängig ist;

g) Erhalten eines Änderungswerts (S) der Zustellrate durch eine Fuzzy-Schlußfolgerung, bei der Daten, die Änderungen in den Schleifbedingungen angeben und die Restschleifmenge (d) umfassen als Eingangsvariablen verwendet werden, um den Änderungswert als eine Ausgangsvariable zu erhalten, wobei die Zustellrate verringert wird, wenn die Restschleifmenge ansteigt.

7. Numerisch gesteuerte Schleifmaschine zum Schleifen eines zylindrischen Werkstücks (W), mit:

   a) einer Einrichtung (23) zum Bewirken einer relativen Zustellbewegung zwischen einer Schleifscheibe (G) und dem Werkstück (W) in radialer Richtung des Werkstücks (W) mit einer Zustellrate (V);

   b) einer Einrichtung (62) zum Erfassen einer Position der Schleifscheibe (G) in der radialen Richtung;

   c) einer Einrichtung (52) zum Messen einer Dimension (Rm) des Werkstücks (W) in der radialen Richtung; und

   d) einer Einrichtung (40) zum Ändern der Zustellrate entsprechend einer Differenz zwischen der gemessenen Dimension (Rm) und einer theoretischen Dimension (Rt) des Werkstücks (W) in der radialen Richtung,

   **gekennzeichnet dadurch**

   e) eine Einrichtung (31) zum Berechnen der theoretischen Dimension (Rt) des Werkstücks (W) auf Grundlage der erfaßten Position, so daß die theoretische Dimension (Rt) die Position eines Schleifpunkts der Schleifscheibe (G) bezüglich einer Drehachse des Werkstücks (W) angibt;

f) eine Einrichtung (31) zum Berechnen einer Restschleifmenge (d) basierend auf einer Differenz zwischen der gemessenen Dimension (Rm) und der theoretischen Dimension (Rt) so daß die Differenz von einem Biegungsgrad des Werkstücks (W) abhängig ist; und

g) eine Einrichtung (30) zum Erhalten eines Änderungsgrads (S) der Zustellrate durch eine Fuzzy-Schlußfolgerung, bei der Daten, die Änderungen in den Schleifbedingungen angeben und die Restschleifmenge (d) umfassen, als Eingangsvariablen verwendet werden zum Erhalten des Änderungswerts als eine Ausgangsvariable, wobei die Zustellrate verringert wird, wenn die Restschleifmenge ansteigt.

8. Numerisch gesteuerte Schleifmaschine nach Anspruch 7,
   **dadurch gekennzeichnet, daß**
   die Einrichtung (30) zum Erhalten des Änderungswerts (S) umfaßt eine Einrichtung (31) zum Berechnen eines Änderungsgrads (Dd) der Restschleifmenge (d) bezüglich einer Zeitdauer, und eine Einrichtung (31) zum Durchführen einer Fuzzy-Schlußfolgerung, bei der die Restschleifmenge (d) und der Änderungsgrad (Dd) der Restschleifmenge (d) als die Daten verwendet werden, die die Schleifbedingungen angeben, zum Erhalten des Änderungswerts (S) der Zustellrate (V).

9. Numerisch gesteuerte Schleifmaschine nach Anspruch 7,
   **gekennzeichnet dadurch**
   eine Einrichtung (331) zum Festlegen eine Zielwerts (Od) der Restschleifmenge (d), wobei die Einrichtung (30) zum Erhalten des Änderungswerts (S) umfaßt eine Einrichtung (31) zum Berechnen einer Abweichung (do) der Restschleifmenge (d) von dem Zielwert (Od), eine Einrichtung (31) zum Berechnen eines Änderungsgrads (Ddo) der Abweichung (do) der Restschleifmenge (d) bezüglich einer Zeitdauer, und eine Einrichtung (31) zum Durchführen einer Fuzzy-Schlußfolgerung, bei der die Abweichung (do) der Restschleifmenge (d) und der Änderungsgrad (Ddo) der Abweichung (do) der Restschleifmenge (d) bezüglich der Zeitdauer als die Daten verwendet werden, die die Schleifbedingungen angeben, zum Erhalten des Änderungswerts (S) der Zustellrate (V).

10. Numerisch gesteuerte Schleifmaschine nach Anspruch 7,
    **gekennzeichnet durch**
    eine Einrichtung (43) zum Eingeben von zumindest einem eines Änderungsgrads (Dt) der Zykluszeit und eines Änderungsgrads (Dr) der Genauigkeit, wobei die Einrichtung (30) zum Erhalten des Änderungswerts (S) umfaßt eine Einrichtung (31) zum Berechnen eines Änderungsgrads (Dd) der Restschleifmenge (d) bezüglich einer Zeitdauer und eine Einrichtung (31) zum Durchführen einer Fuzzy-Schlußfolgerung, bei der die Restschleifmenge (d) und zumindest einer des Änderungsgrads (Dt) der Zykluszeit und des Änderungsgrads (Dr) der Genauigkeit als die Daten verwendet werden, die die Schleifbedingungen angeben, zum Erhalten des Änderungswerts (S) der Zustellrate (V).

11. Numerisch gesteuerte Schleifmaschine nach Anspruch 7,
    **gekennzeichnet dadurch**
    eine Einrichtung (43) zum Eingeben von zumindest einem eines Änderungsgrads (Dt) der Zykluszeit und eines Änderungsgrads (Dr) der Genauigkeit, wobei die Einrichtung (30) zum Erhalten des Änderungswerts (S) umfaßt eine Einrichtung (31) zum Durchführen einer Fuzzy-Schlußfolgerung, bei der die Restschleifmenge (d) und zumindest einer des Änderungsgrads (Dt) der Zykluszeit und des Änderungsgrads (Dr) der Genauigkeit als die Daten verwendet werden, die die Schleifbedingungen angeben, zum Erhalten eines Zielwerts der Restschleifmenge (d) als der Änderungswert (S), und wobei die Einrichtung zum Ändern der Zustellrate (V) den Zielwert als den Änderungswert betrachtet, so daß die Zustellrate (V) entsprechend dem Zielwert geändert wird, um die Restschleifmenge (d) an den Zielwert anzunähern.

12. Verfahren zum Schleifen eines zylindrischen Werkstücks (W) mit einer Schleifscheibe (G), wobei das Verfahren die Schritte umfaßt:

    a) Bewirken einer relativen Zustellbewegung zwischen der Schleifscheibe (G) und dem Werkstück (W) in radialer Richtung des Werkstücks (W) mit einer Zustellrate (V);
    b) Erfassen einer Position der Schleifscheibe (G) in der radialen Richtung;
    c) Messen einer Dimension (Rm) des Werkstücks (W) in der radialen Richtung; und
    d) Ändern der Zustellrate entsprechend einer Differenz zwischen der gemessenen Dimension (Rm) und einer theoretischen Dimension (Rt) des Werkstücks (W) in der radialen Richtung,
    **gekennzeichnet durch** die Schritte:
    e) Berechnen der theoretischen Dimension (Rt) des Werkstücks (W) auf Grundlage der erfaßten Position, so daß die theoretische Dimension (Rt) die Position eines Schleifpunkts auf der Schleifscheibe (G) bezüglich einer Drehachse des Werkstücks (W) angibt;
    f) Berechnen einer Restschleifmenge (d) basierend auf einer Differenz zwischen der gemessenen Dimension (Rm) und der theoretischen Dimension (Rt), so daß die Restschleifmenge (d) von einem Biegungsgrad des Werkstücks (W) abhängig ist;

g) Erhalten eines Änderungswerts (S) der Zustellrate basierend auf der berechneten Restschleifmenge (d) und Daten (dmin, dmax), die eine bevorzugte Restschleifmenge angeben, wobei die Zustellrate erhöht wird, wenn sich die Restschleifmenge unterhalb der bevorzugten Restschleifmenge befindet.

13. Numerisch gesteuerte Schleifmaschine zum Schleifen eines zylindrischen Werkstücks (W), mit:

a) einer Einrichtung (23) zum Bewirken einer relativen Zustellbewegung zwischen einer Schleifscheibe (G) und dem Werkstück (W) in radialer Richtung des Werkstücks (W) mit einer Zustellrate (V);
b) einer Einrichtung (62) zum Erfassen einer Position der Schleifscheibe (G) in der radialen Richtung;
c) einer Einrichtung (52) zum Messen einer Dimension (Rm) des Werkstücks (W) in der radialen Richtung; und
d) einer Einrichtung (40) zum Ändern der Zustellrate entsprechend einer Differenz zwischen der gemessenen Dimension (Rm) und einer theoretischen Dimension (Rt) des Werkstücks (W) in der radialen Richtung,
**gekennzeichnet durch**
e) eine Einrichtung (31) zum Berechnen der theoretischen Dimension (Rt) des Werkstücks (W) auf Grundlage der erfaßten Position, so daß die theoretische Dimension (Rt) die Position eines Schleifpunkts auf der Schleifscheibe (G) bezüglich einer Drehachse des Werkstücks (W) angibt;
f) eine Einrichtung (31) zum Berechnen einer Restschleifmenge (d) basierend auf einer Differenz zwischen der gemessenen Dimension (Rm) und der theoretischen Dimension (Rt), so daß die Differenz von einem Biegungsgrad des Werkstücks (W) abhängig ist; und
g) eine Einrichtung (30) zum Erhalten eines Änderungswerts (S) der Zustellrate basierend auf der berechneten Restschleifmenge (d) und Daten (dmin, dmax), die eine bevorzugte Restschleifmenge angeben, wobei die Zustellrate erhöht wird, wenn die Restschleifmenge sich unterhalb der bevorzugten Restschleifmenge befindet.

14. Verfahren zum Schleifen eines zylindrischen Werkstücks (W) mit einer Schleifscheibe (G), wobei das Verfahren die Schritte umfaßt:

a) Bewirken einer relativen Zustellbewegung zwischen der Schleifscheibe (G) und dem Werkstück (W) in radialer Richtung des Werkstücks (W) mit einer Zustellrate (V);
b) Erfassen einer Position der Schleifscheibe (G) in der radialen Richtung;
c) Messen einer Dimension (Rm) des Werkstücks (W) in der radialen Richtung; und
d) Ändern der Zustellrate entsprechend einer Differenz zwischen der gemessenen Dimension (Rm) und einer theoretischen Dimension (Rt) des Werkstücks (W) in der radialen Richtung,
**gekennzeichnet durch** die Schritte:
e) Berechnen der theoretischen Dimension (Rt) des Werkstücks (W) auf Grundlage der erfaßten Position, so daß die theoretische Dimension (Rt) die Position eines Schleifpunkts auf der Schleifscheibe (G) bezüglich einer Drehachse des Werkstücks (W) angibt;
f) Berechnen einer Restschleifmenge (d) basierend auf einer Differenz zwischen der gemessenen Dimension (Rm) und der theoretischen Dimension (Rt), so daß die Differenz von einem Biegungsgrad des Werkstücks (W) abhängig ist;
g) Erhalten eines Änderungswerts (S) der Zustellrate durch eine Fuzzy-Schlußfolgerung, bei der Daten, die Änderungen in den Schleifbedingungen angeben und die Restschleifmenge (d) umfassen, als Eingangsvariablen zum Erhalten des Änderungswerts als eine Ausgangsvariable verwendet werden, wobei die Zustellrate erhöht wird, wenn die Restschleifmenge abnimmt.

15. Numerisch gesteuerte Schleifmaschine zum Schleifen eines zylindrischen Werkstücks (W), mit:

a) einer Einrichtung (23) zum Bewirken einer relativen Zustellbewegung zwischen einer Schleifscheibe (G) und dem Werkstücks (W) in radialer Richtung des Werkstücks (W) mit einer Zustellrate (V);
b) einer Einrichtung (62) zum Erfassen einer Position der Schleifscheibe (G) in der radialen Richtung;
c) einer Einrichtung (52) zum Messen einer Dimension (Rm) des Werkstücks (W) in der radialen Richtung; und
d) einer Einrichtung (40) zum Ändern der Zustellrate entsprechend einer Differenz zwischen der gemessenen Dimension (Rm) und einer theoretischen Dimension (Rt) des Werkstücks (W) in der radialen Richtung,
**gekennzeichnet durch**
e) eine Einrichtung (31) zum Berechnen der theoretischen Dimension (Rt) des Werkstücks (W) auf Grundlage der erfaßten Position, so daß die theoretische Dimension (Rt) die Position eines Schleifpunkts auf der Schleifscheibe (G) bezüglich einer Drehachse des Werkstücks (W) angibt;

f) eine Einrichtung (31) zum Berechnen einer Restschleifmenge (d) basierend auf einer Differenz zwischen der gemessenen Dimension (Rm) und der theoretischen Dimension (Rt), so daß die Differenz von einem Biegungsgrad des Werkstücks (W) abhängig ist; und

g) eine Einrichtung (30) zum Erhalten eines Änderungswerts (S) der Zustellrate durch eine Fuzzy-Schlußfolgerung, bei der Daten, die Änderungen in den Schleifbedingungen angeben und die Restschleifmenge (d) umfassen, als Eingangsvariablen verwendet werden zum Erhalten des Änderungswerts als eine Ausgangsvariable, wobei die Zustellrate erhöht wird, wenn die Restschleifmenge abnimmt.

**Revendications**

1. Procédé de rectification d'une pièce d'oeuvre (W), cylindrique, à l'aide d'une meule (G), ledit procédé comprenant les étapes :

a) d'exécution d'un déplacement relatif d'avance en plongée entre ladite meule (G) et ladite pièce d'oeuvre (W) dans une direction radiale de ladite pièce d'oeuvre (W) à une vitesse (V) d'avance en plongée ;

b) de détection d'une position de ladite meule (G) dans ladite direction radiale :

c) de mesure d'une dimension (Rm) de ladite pièce d'oeuvre (W) dans ladite direction radiale ; et

d) de modification de ladite vitesse d'avance en plongée en fonction de la différence entre ladite dimension mesurée (Rm) et une dimension théorique (Rt) de ladite pièce d'oeuvre (W) dans ladite direction radiale ;

caractérisé par les étapes :

e) de calcul de ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W) ;

f) de calcul d'un montant (d) de meulage résiduel basé sur la différence entre ladite dimension mesurée (Rm) et ladite dimension théorique (Rt) de sorte que ledit montant (d) de meulage résiduel dépend de l'importance de la flexion de ladite pièce d'oeuvre (W) ; et

g) d'obtention d'une valeur (S) de modification de ladite vitesse d'avance en plongée, basée sur ledit montant (d), calculé, de meulage résiduel et sur des données (dmin, dmax) indiquant un montant préférable de meulage résiduel, ladite vitesse d'avance en plongée étant réduite lorsque ledit montant de meulage résiduel excède ledit montant préférable de meulage résiduel.

2. Rectifieuse à commande numérique destinée à rectifier une pièce d'oeuvre (W) cylindrique, comprenant :

a) un moyen (23) destiné à exécuter un déplacement relatif d'avance en plongée entre ladite meule (G) et ladite pièce d'oeuvre (W) dans une direction radiale de ladite pièce d'oeuvre (W) à une vitesse (V) d'avance en plongée ;

b) un moyen (62) destiné à détecter une position de ladite meule (G) dans ladite direction radiale ;

c) un moyen (52) destiné à mesurer une dimension (Rm) de ladite pièce d'oeuvre (W) dans ladite direction radiale ; et

d) un moyen (40) destiné à modifier ladite vitesse d'avance en plongée en fonction de la différence entre ladite dimension mesurée (Rm) et une dimension théorique (Rt) de ladite pièce d'oeuvre (W) dans ladite direction radiale;

caractérisée par :

e) un moyen (31) destiné à calculer ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W) ;

f) un moyen (31) destiné à calculer un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ; et

g) un moyen (30) destiné à obtenir une valeur (S) de modification de ladite vitesse d'avance en plongée, basée sur ledit montant (d), calculé, de meulage résiduel et sur des données (dmin, dmax) indiquant un montant préférable de meulage résiduel, ladite vitesse d'avance en plongée étant réduite lorsque ledit montant de meulage résiduel excède ledit montant préférable de meulage résiduel.

3. Rectifieuse à commande numérique selon la revendication 2,

caractérisée en ce que :

ledit moyen (30) destiné à obtenir ladite valeur de modification comprend un moyen de calcul (31) destiné à calculer ladite valeur de modification en se basant sur ledit montant (d) de meulage résiduel et sur des valeurs limites maximale et minimale (dmax, dmin) indiquant ledit montant préférable de meulage résiduel.

**4.** Rectifieuse à commande numérique selon la revendication 3,

caractérisée en ce que :

ladite valeur limite maximale (dmax) se calcule en multipliant une vitesse (Vo) d'avance en plongée normalisée par une première constante (k1), tandis que ladite valeur limite minimale (dmin) se calcule en multipliant ladite vitesse (Vo) d'avance en plongée normalisée par une seconde constante (k2).

**5.** Rectifieuse à commande numérique selon la revendication 3,

caractérisée en ce que :

lesdites valeurs limites maximale et minimale (dmax, dmin) se déterminent, respectivement, en se basant sur un montant maximal de meulage résiduel et sur un montant minimal de meulage résiduel détectés au cours d'une rectification d'essai dans laquelle on a rectifié une pièce d'oeuvre à une vitesse d'avance en plongée constante prédéterminée.

**6.** Procédé de rectification d'une pièce d'oeuvre (W), cylindrique, à l'aide d'une meule (G), ledit procédé comprenant les étapes :

a) d'exécution d'un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) de détection d'une position de ladite meule (G) dans ladite direction radiale :
c) de mesure d'une dimension (Rm) de ladite pièce d'oeuvre (W) dans ladite direction radiale ; et
d) de modification de ladite vitesse d'avance en plongée en fonction de la différence entre ladite dimension mesurée (Rm) et une dimension théorique (Rt) de ladite pièce d'oeuvre (W) dans ladite direction radiale;

caractérisé par les étapes :
e) de calcul de ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W) ;
f) de calcul d'un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ;
g) d'obtention d'une valeur de modification (S) de ladite vitesse d'avance en plongée par une inférence floue dans laquelle on utilise, comme variables d'entrée, des données indiquant des modifications de conditions de meulage et comprenant ledit montant (d) de meulage résiduel, pour obtenir, comme variable de sortie, ladite valeur de modification, ladite vitesse d'avance en plongée étant réduite lorsque ledit montant de meulage résiduel augmente.

**7.** Rectifieuse à commande numérique destinée à rectifier une pièce d'oeuvre (W) cylindrique, comprenant :

a) un moyen (23) destiné à exécuter un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) un moyen (62) destiné à détecter une position de ladite meule (G) dans ladite direction radiale ;
c) un moyen (52) destiné à mesurer une dimension (Rm) de ladite pièce d'oeuvre (W) dans ladite direction radiale ; et ;
d) un moyen (40) destiné à modifier ladite vitesse d'avance en plongée en fonction de la différence entre ladite dimension mesurée (Rm) et une dimension théorique (Rt) de ladite pièce d'oeuvre (W) dans ladite direction radiale;

caractérisée par :
e) un moyen (31) destiné à calculer ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W);
f) un moyen (31) destiné à calculer un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ; et
g) un moyen (30) destiné à obtenir une valeur de modification (S) de ladite vitesse d'avance en plongée par une inférence floue dans laquelle on utilise, comme variables d'entrée, des données indiquant des modifications de conditions de meulage et comprenant ledit montant (d) de meulage résiduel, pour obtenir, comme variable de sortie, ladite valeur de modification, ladite vitesse d'avance en plongée étant réduite lorsque ledit montant de meulage résiduel augmente.

**8.** Rectifieuse à commande numérique selon la revendication 7,

caractérisée en ce que :

ledit moyen (30) destiné à obtenir ladite valeur de modification (S) comprend un moyen (31) destiné à calculer un montant de modification (Dd) dudit montant (d) de meulage résiduel en fonction de l'écoulement du temps, et un moyen (31) destiné à effectuer une inférence floue dans laquelle on utilise, comme lesdites données indiquant des conditions de meulage, ledit montant (d) de meulage résiduel et ledit montant de modification (Dd) dudit montant (d) de meulage résiduel, pour obtenir ladite valeur de modification (S) de ladite vitesse (V) d'avance en plongée.

9. Rectifieuse à commande numérique selon la revendication 7,
caractérisée par :
un moyen (331) pour fixer une valeur cible (Od) dudit montant (d) de meulage résiduel, ledit moyen (30) destiné à obtenir ladite valeur de modification (S) comprenant un moyen (31) destiné à calculer un écart (do) dudit montant (d) de meulage résiduel par rapport à ladite valeur cible (Od) ; un moyen (31) destiné à calculer un montant de modification (Ddo) dudit écart (do) dudit montant (d) de meulage résiduel en fonction de l'écoulement du temps, et un moyen (31) destiné à effectuer une inférence floue dans laquelle on utilise, comme lesdites données indiquant des conditions de meulage, ledit écart (do) dudit montant (d) de meulage résiduel et ledit montant de modification (Ddo) dudit écart (do) dudit montant (d) de meulage résiduel en fonction de l'écoulement du temps, pour obtenir ladite valeur de modification (S) de ladite vitesse (V) d'avance en plongée.

10. Rectifieuse à commande numérique selon la revendication 7,
caractérisée par :
un moyen (43) destiné à entrer au moins l'un d'un montant de modification (Dt) de durée de cycle et d'un montant de modification (Dr) de précision, ledit moyen (30) destiné à obtenir ladite valeur de modification (S) comprenant un moyen (31) destiné à calculer un montant de modification (Dd) dudit montant (d) de meulage résiduel en fonction de l'écoulement du temps et un moyen (31) pour effectuer une inférence floue dans laquelle on utilise, comme lesdites données indiquant des conditions de rectification, ledit montant (d) de meulage résiduel et au moins l'un dudit montant de modification (Dt) de durée de cycle et dudit montant de modification (Dr) de précision, pour obtenir ladite valeur de modification (S) de ladite vitesse (V) d'avance en plongée.

11. Rectifieuse à commande numérique selon la revendication 7,
caractérisée par :
un moyen (43) destiné à entrer au moins l'un d'un montant de modification (Dt) de durée de cycle et d'un montant de modification (Dr) de précision, ledit moyen (30) destiné à obtenir ladite valeur de modification (S) comprenant un moyen (31) destiné à effectuer une inférence floue dans laquelle on utilise, comme lesdites données indiquant des conditions de rectification, ledit montant (d) de meulage résiduel et au moins l'un dudit montant de modification (Dt) de durée de cycle et dudit montant de modification (Dr) de précision, pour obtenir, comme ladite valeur de modification (S), une valeur cible dudit montant (d) de meulage résiduel ; et ledit moyen destiné à modifier ladite vitesse (V) d'avance en plongée considérant ladite valeur cible comme ladite valeur de modification de façon à modifier ladite valeur (V) d'avance en plongée en fonction de ladite valeur cible pour faire que ledit montant (d) de meulage résiduel approche ladite valeur cible.

12. Procédé de rectification d'une pièce d'oeuvre (W), cylindrique, à l'aide d'une meule (G), ledit procédé comprenant les étapes :

a) d'exécution d'un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) de détection d'une position de ladite meule (G) dans ladite direction radiale :
c) de mesure d'une dimension (Rm) de ladite pièce d'oeuvre (W) dans ladite direction radiale ; et
d) de modification de ladite vitesse d'avance en plongée en fonction de la différence entre ladite dimension mesurée (Rm) et une dimension théorique (Rt) de ladite pièce d'oeuvre (W) dans ladite direction radiale;
caractérisé par les étapes :
e) de calcul de ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W);
f) de calcul d'un montant (d) de meulage résiduel basé sur la différence entre ladite dimension mesurée (Rm) et ladite dimension théorique (Rt) de sorte que ledit montant (d) de meulage résiduel dépend de l'importance de la flexion de ladite pièce d'oeuvre (W) ; et
g) d'obtention d'une valeur (S) de modification de ladite vitesse d'avance en plongée, basée sur ledit montant (d), calculé, de meulage résiduel et sur des données (dmin, dmax) indiquant un montant préférable de meulage résiduel, ladite vitesse d'avance en plongée étant augmentée lorsque ledit montant de meulage résiduel est au-dessous dudit montant préférable de meulage résiduel.

**13.** Rectifieuse à commande numérique destinée à rectifier une pièce d'oeuvre (W) cylindrique, comprenant :

a) un moyen (23) destiné à exécuter un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) un moyen (62) destiné à détecter une position de ladite meule (G) dans ladite direction radiale ;
c) un moyen (52) destiné à mesurer une dimension (Rm) de ladite pièce d'oeuvre (W) dans ladite direction radiale ; et ;
d) un moyen (40) destiné à modifier ladite vitesse d'avance en plongée en fonction de la différence entre ladite dimension mesurée (Rm) et une dimension théorique (Rt) de ladite pièce d'oeuvre (W) dans ladite direction radiale;
    caractérisée par :
e) un moyen (31) destiné à calculer ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W);
f) un moyen (31) destiné à calculer un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ; et
g) un moyen (30) destiné à obtenir une valeur (S) de modification de ladite vitesse d'avance en plongée, basée sur ledit montant (d), calculé, de meulage résiduel et sur des données (dmin, dmax) indiquant un montant préférable de meulage résiduel, ladite vitesse d'avance en plongée étant augmentée lorsque ledit montant de meulage résiduel est au-dessous dudit montant préférable de meulage résiduel.

**14.** Procédé de rectification d'une pièce d'oeuvre (W), cylindrique, à l'aide d'une meule (G), ledit procédé comprenant les étapes :

a) d'exécution d'un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) de détection d'une position de ladite meule (G) dans ladite direction radiale :

c) de mesure d'une dimension (Rm) de ladite pièce d'oeuvre (W) dans ladite direction radiale ; et
d) de modification de ladite vitesse d'avance en plongée en fonction de la différence entre ladite dimension mesurée (Rm) et une dimension théorique (Rt) de ladite pièce d'oeuvre (W) dans ladite direction radiale;
    caractérisé par les étapes :
e) de calcul de ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W) ;
f) de calcul d'un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ;
g) d'obtention d'une valeur de modification (S) de ladite vitesse d'avance en plongée par une inférence floue dans laquelle on utilise, comme variables d'entrée, des données indiquant des modifications de conditions de meulage et comprenant ledit montant (d) de meulage résiduel, pour obtenir, comme variable de sortie, ladite valeur de modification, ladite vitesse d'avance en plongée étant augmentée lorsque ledit montant de meulage résiduel diminue.

**15.** Rectifieuse à commande numérique destinée à rectifier une pièce d'oeuvre (W) cylindrique, comprenant :

a) un moyen (23) destiné à exécuter un déplacement relatif d'avance en plongée entre ladite meule (G) et ladite pièce d'oeuvre (W) dans une direction radiale de ladite pièce d'oeuvre (W) à une vitesse (V) d'avance en plongée ;
b) un moyen (62) destiné à détecter une position de ladite meule (G) dans ladite direction radiale ;
c) un moyen (52) destiné à mesurer une dimension (Rm) de ladite pièce d'oeuvre (W) dans ladite direction radiale ; et ;
d) un moyen (40) destiné à modifier ladite vitesse d'avance en plongée en fonction de la différence entre ladite dimension mesurée (Rm) et une dimension théorique (Rt) de ladite pièce d'oeuvre (W) dans ladite direction radiale;
    caractérisée par :
e) un moyen (31) destiné à calculer ladite dimension théorique (Rt) de ladite pièce d'oeuvre (W) sur la base de ladite position détectée, de sorte que ladite dimension théorique (Rt) indique la position d'un point de meulage de ladite meule (G) par rapport à l'axe de rotation de ladite pièce d'oeuvre (W) ;

f) un moyen (31) destiné à calculer un montant (d) de meulage résiduel basé sur la différence entre ladite dimension mesurée (Rm) et ladite dimension théorique (Rt) de sorte que ladite différence dépend de l'importance de la flexion de ladite pièce d'oeuvre (W) ; et

g) un moyen (30) destiné à obtenir une valeur de modification (S) de ladite vitesse d'avance en plongée par une inférence floue dans laquelle on utilise, comme variables d'entrée, des données indiquant des modifications de conditions de meulage et comprenant ledit montant (d) de meulage résiduel, pour obtenir, comme variable de sortie, ladite valeur de modification, ladite vitesse d'avance en plongée étant augmentée lorsque ledit montant de meulage résiduel diminue.

F I G. 1

EP 0 562 632 B1

F I G. 2

EP 0 562 632 B1

# F I G. 3

```
              ┌─────────┐
              │  START  │
              └─────────┘
                   │
        ┌──────────────────────┐  ╭ 1 0 0
        │  OBTAIN  MEASURED    │
        │  RADIUS              │
        └──────────────────────┘
                   │
        ┌──────────────────────┐  ╭ 1 0 2
        │  READ  POSITION  OF  │
        │  GRINDING  WHEEL     │
        └──────────────────────┘
                   │
        ┌──────────────────────┐  ╭ 1 0 4
        │  CALCULATE  RESIDUAL │
        │  GRINDING  AMOUNT    │
        └──────────────────────┘
                   │
        ┌──────────────────────┐  ╭ 1 0 6
        │  CALCULATE  MAX.  AND│
        │  MIN.  LIMIT  VALUES │
        └──────────────────────┘
                   │
             ╱─────────────────╲  ╭ 1 0 8            Yes
            ╱  REDIDUAL  IS      ╲
           ╱  LARGER THAN MAX.    ╲─────────────────────┐
           ╲  LIMIT  VALUE  ?     ╱                      │
            ╲                    ╱                       │
             ╲─────────────────╱                         │
                   │ No                                  │
             ╱─────────────────╲  ╭ 1 1 2                │
        No  ╱  REDIDUAL  AMOUNT IS╲                      │
       ┌───╱  LARGER THAN ZERO     ╲                     │
       │   ╲  AND  SMALLER THAN    ╱                     │
       │    ╲ MIN.  LIMIT VALUE ? ╱                      │
       │     ╲─────────────────╱                         │
       │           │ Yes      1 1 4                      │ ╭ 1 1 0
       │   ┌──────────────────────┐         ┌──────────────────────┐
       │   │  ACCELERATION        │         │  DECELERATION        │
       │   │  V' = V + α          │         │  V' = V - β          │
       │   │  α = f (V, Δ, Δmin)  │         │  β = f (V, Δ, Δmax)  │
       │   └──────────────────────┘         └──────────────────────┘
       │           │                                     │
       └───────────┼─────────────────────────────────────┘
                   │
              ┌─────────┐
              │  E N D  │
              └─────────┘
```

Acceleration: $V' = V + \alpha$, $\alpha = f(V, \Delta, \Delta_{min})$

Deceleration: $V' = V - \beta$, $\beta = f(V, \Delta, \Delta_{max})$

F I G. 4

$$Rt = G - r$$
$$d = Rm - Rt$$

# F I G. 5

START

OBTAIN MEASURED RADIUS — 120

READ POSITION OF GRINDING WHEEL — 122

CALCULATE RESIDUAL GRINDING AMOUNT — 124

CALCULATE MAX. AND MIN. LIMIT VALUES — 126

$V' = f(V, d, dmax, dmin)$ — 128

E N D

FIG. 6 (a)

START

140
GRINDING WORKPIECE AT
CONSTANT INFEED RATE

142
No ⟨ HAVE PREDETERMINED
NUMBERS OF WORKPIECES
BEEN GROUND ?

Yes

144
CARRY OUT DRESSING
OF GRINDING WHEEL

146
DETERMINE MAXIMUM AND
MINIMUM LIMIT VALUES

END

F I G. 6 (b)

```
        ┌─────────────┐
        │    START    │
        └──────┬──────┘
               │                        1 5 0
    ┌──────────┴──────────┐
    │  OBTAIN  MEASURED   │
    │  RADIUS             │
    └──────────┬──────────┘
               │                        1 5 2
    ┌──────────┴──────────┐
    │  READ  POSITION  OF │
    │  GRINDING  WHEEL    │
    └──────────┬──────────┘
               │                        1 5 4
    ┌──────────┴──────────┐
    │  CALCULATE  RESIDUAL│
    │  GRINDING  AMOUNT   │
    └──────────┬──────────┘
               │                        1 5 8
    ┌──────────┴──────────┐
    │  V' = f (V, d, dmax, dmin)  │
    └──────────┬──────────┘
               │
        ┌──────┴──────┐
        │   E  N  D   │
        └─────────────┘
```

# F I G. 7

EP 0 562 632 B1

EP 0 562 632 B1

# F I G. 8

START

200

READ WORKPIECE SHAPE, KIND OF GRINDING WHEEL, DESIRED ACCURACY (TOLERANCE, SURFACE ROUGHNESS), AND STANDARD INFEED RATE

202

CALCULATE STIFFNESS VALUE A

204

DETERMINE WHEEL CONST. B

206

DETERMINE ACCURACY CONST. C

208

START INFEED AT INFEED RATE Vo

210

READ MEASURED RADIUS Rm

212

READ PRESENT POSITION OF GRINDING WHEEL AND REGARD IT AS THEORETICAL RADIUS Rt

214

CALCULATE RESIDUAL GRINDING AMOUNT d
$d = Rm - Rt$

216

CALCULATE CHANGE AMOUNT Dd
$Dd = d_{new} - d_{old}$

218

FUZZY INFERENCE

220

MODIFY INFEED RATE
$V' = V(1 + aS)$

30

FIG. 9

| No | STIFFN-ESS<br>A | WHEEL CONST.<br>B | ACCURACY CONST.<br>C | RESIDUAL AMOUNT<br>d | CHANGE AMOUNT<br>Dd | INFEED CHANGE RATE<br>S |
|---|---|---|---|---|---|---|
| 1 | LARGE | LARGE | | LARGE | | LARGE DECREASE |
| 2 | LARGE | | LARGE | MEDIUM | LARGE | LARGE DECREASE |
| 3 | MEDIUM | LARGE | | LARGE | LARGE | LARGE DECREASE |
| 4 | MEDIUM | MEDIUM | | MEDIUM | | MEDIUM DECREASE |
| 5 | MEDIUM | | MEDIUM | LARGE | | MEDIUM DECREASE |
| 6 | SMALL | LARGE | | LARGE | MEDIUM | MEDIUM DECREASE |
| 7 | MEDIUM | LARGE | SMALL | LARGE | | SMALL DECREASE |
| 8 | LARGE | LARGE | SMALL | MEDIUM | SMALL | SMALL DECREASE |
| 9 | SMALL | | | LARGE | LARGE | SMALL DECREASE |
| 10 | LARGE | SMALL | SMALL | SMALL | MEDIUM | SMALL INCREASE |
| 11 | MEDIUM | | | MEDIUM | SMALL | SMALL INCREASE |
| 12 | SMALL | SMALL | LARGE | SMALL | | SMALL INCREASE |
| 13 | LARGE | | | SMALL | | MEDIUM INCREASE |
| 17 | SMALL | | SMALL | SMALL | SMALL | LARGE INCREASE |
| 18 | MEDIUM | LARGE | SMALL | SMALL | SMALL | LARGE INCREASE |

EP 0 562 632 B1

# F I G . 1 0

# F I G . 1 1

F I G . 1 2

```
                    ( START )
                        │
        ┌───────────────┴───────────────┐   300
        │   INITIALIZE  RULE  No. K      │
        └───────────────┬───────────────┘
   ┌──────────────────► │
   │    ┌───────────────┴───────────────┐   302
   │    │   CALCULATE  FITNESS           │
   │    │   DEGREES                      │
   │    └───────────────┬───────────────┘
   │310 ┌───────────────┴───────────────┐   304
 ┌─┴──┐ │   SELECT  MINIMUM  VALUE       │
 │K=K+1│ └───────────────┬───────────────┘
 └─┬──┘ ┌───────────────┴───────────────┐   306
   │    │   DETERMINE  ZONE  USING       │
   │    │   OUTPUT  MEMBERSHIP           │
   │    │   FUNCTION                     │
   │    └───────────────┬───────────────┘
   │  No       ┌────────┴────────┐  308
   └───────────┤  IS  K  LAST?   │
               └────────┬────────┘
                     Yes │
        ┌───────────────┴───────────────┐   312
        │   DETERMINE  MAXIMUM           │
        │   VALUE  AREA                  │
        └───────────────┬───────────────┘
        ┌───────────────┴───────────────┐   314
        │   CALCULATE  CENTER            │
        │   OF  GRAVITY                  │
        └───────────────┬───────────────┘
        ┌───────────────┴───────────────┐   316
        │   CALCULATE  CONTROL           │
        │   VALUE                        │
        └───────────────┬───────────────┘
                    ( START )
```

F I G . 1 3

F I G . 1 4

# F I G. 1 5

| No | DEVIATION TO TARGET VALUE do | CHANGE AMOUNT Ddo | INFEED CHANGE RATE S |
|---|---|---|---|
| 1 | LARGE | SLIGHTLY LARGE | LARGE DECREASE |
| 2 | MEDIUM LARGE | MEDIUM LARGE | LARGE DECREASE |
| 3 | MEDIUM LARGE | SLIGHTLY LARGE | MEDIUM DECREASE |
| 4 | SLIGHTLY LARGE | LARGE | LARGE DECREASE |
| 5 | SLIGHTLY LARGE | MEDIUM LARGE | MEDIUM DECREASE |
| 6 | SLIGHTLY LARGE | SLIGHTLY LARGE | SMALL DECREASE |
| 7 | NEARLY ZERO | MEDIUM LARGE | SMALL DECREASE |
| 8 | NEARLY ZERO | MEDIUM SMALL | SMALL INCREASE |
| 9 | SLIGHTLY SMALL | SLIGHTLY SMALL | SMALL INCREASE |
| 10 | MEDIUM SMALL | NEARLY ZERO | MEDIUM INCREASE |
| 11 | MEDIUM SMALL | SLIGHTLY LARGE | SMALL INCREASE |
| 12 | SMALL | NEARLY ZERO | LARGE INCREASE |
| 13 | SMALL | SLIGHTLY LARGE | MEDIUM INCREASE |
| 14 | SMALL | MEDIUM LARGE | SMALL INCREASE |

EP 0 562 632 B1

## F I G. 1 6

```
                    ( START )

      ┌─────────────────────────────────────┐ 400
      │ INPUT TARGET VALUE Od OF            │
      │ RESIDUAL GRINDING AMOUNT            │
      │ AND STANDARD INFEED RATE Vo         │
      └─────────────────────────────────────┘

          ┌─────────────────────────┐ 402
          │ START INFEED AT         │
          │ INFEED RATE Vo          │
          └─────────────────────────┘

        ┌─────────────────────────────┐ 404
        │ READ MEASURED RADIUS Rm     │
        └─────────────────────────────┘

    ┌─────────────────────────────────────┐ 406
    │ READ PRESENT POSITION OF            │
    │ GRINDING WHEEL AND REGARD IT AS     │
    │ THEORETICAL RADIUS Rt               │
    └─────────────────────────────────────┘

         ┌─────────────────────────────┐ 408
         │ CALCULATE RESIDUAL          │
         │ GRINDING AMOUNT d           │
         │     d = Rm − Rt             │
         └─────────────────────────────┘

         ┌─────────────────────────────┐ 410
         │ CALCULATE DEVIATION         │
         │ FROM TARGET VALUE do        │
         │     do = d − Od             │
         └─────────────────────────────┘

    ┌─────────────────────────────────────┐ 412
    │ CALCULATE CHANGE AMOUNT OF          │
    │ DEVIATION    Ddo = do_new − do_old  │
    └─────────────────────────────────────┘

          ┌─────────────────────────┐ 414
          ║ FUZZY INFERENCE         ║
          └─────────────────────────┘

      ┌─────────────────────────────────┐ 416
      │ MODIFY INFEED VELOCITY          │
      │     V' = V (1 + aS)             │
      └─────────────────────────────────┘
```

# F I G.   1 7

| No | INFEED RATE V | TARGET VALUE Od | CYCLE TIME CHANGE AMOUNT Dt | ACCURACY CHANGE AMOUNT Dr | TARGET VALUE CHANGE RATE ROd |
|---|---|---|---|---|---|
| 1 | SMALL | SMALL | SHORTER | | SMALL INC. |
| 2 | SMALL | LARGE | SHORTER | | MEDIUM INC. |
| 3 | SMALL | LARGE | SLIGHTLY SHORTER | | SMALL INC. |
| 4 | LARGE | SMALL | SHORTER | | LARGE INC. |
| 5 | LARGE | SMALL | SLIGHTLY SHORTER | | MEDIUM INC. |
| 6 | LARGE | LARGE | SLIGHTLY SHORTER | | SMALL INC. |
| 7 | SMALL | SMALL | | INCREASE | SMALL DEC. |
| 8 | SMALL | LARGE | | INCREASE | MIDDLE DEC. |
| 9 | SMALL | LARGE | | SMALL INCREASE | SMALL DEC. |
| 10 | LARGE | SMALL | | INCREASE | LARGE DEC. |
| 11 | LARGE | SMALL | | SMALL INCREASE | MEDIUM DEC. |
| 12 | LARGE | SMALL | | SMALL INCREASE | SMALL DEC. |

EP 0 562 632 B1

F I G. 1 8

START

INPUT TARGET VALUE Od, INFEED
RATE Vo, CYCLE TIME CHANGE AMOUNT
Dt AND ACCURACY CHANGE AMOUNT

500

FUZZY INFERENCE

502

MODIFY TARGET VALUE OF
RESIDUAL GRINDING AMOUNT
$Od = Od (1 + b \cdot ROd)$

504

TO FIG. 16

## F I G. 1 9

```
            ┌─────────┐
            │  START  │
            └────┬────┘
                 │                                    600
    ┌────────────┴──────────────────────────┐
    │ INPUT TARGET VALUE Od,   INFEED        │
    │ RATE Vo, CYCLE TIME CHANGE AMOUNT      │
    │ Dt AND ACCURACY CHANGE AMOUNT          │
    └────────────┬──────────────────────────┘
                 │                       602
         ┌───────┴──────────┐
         │ START INFEED AT   │
         │ INFEED RATE Vo     │
         └───────┬──────────┘
                 │
                 ▼                          604
    ┌────────────────────────────┐
    │ READ MEASURED RADIUS Rm     │
    └────────────┬───────────────┘
                 │                          606
    ┌────────────┴──────────────────────────┐
    │ READ PRESENT POSITION OF               │
    │ GRINDING WHEEL AND REGARD IT AS        │
    │ THEORETICAL RADIUS Rt                  │
    └────────────┬──────────────────────────┘
                 │                       608
    ┌────────────┴──────────────┐
    │  CALCULATE RESIDUAL        │
    │  GRINDING AMOUNT d          │
    │      d = Rm − Rt            │
    └────────────┬──────────────┘
                 │                          610
    ┌────────────┴──────────────┐
    │ CALCULATE CHANGE AMOUNT Dd  │
    │   Dd = d_new − d_old        │
    └────────────┬──────────────┘
                 │                        612
    ┌┤────────────────────────┤┐
    │  FUZZY INFERENCE          │
    └┤────────────────────────┤┘
                 │                          614
    ┌────────────┴──────────────┐
    │ MODIFY INFEED VELOCITY      │
    │    V' = V (1 + aS)          │
    └────────────┬──────────────┘
                 │
                 └──────────────────────────────┘
```